# EUROPEAN PATENT SPECIFICATION

(11) **EP 2 032 722 B1**
(45) Date of publication and mention of the grant of the patent: **21.08.2013**
(21) Application number: 07795001.2
(22) Date of filing: 16.05.2007
(51) Int. Cl.: C12Q 1/68, B01L 3/00, C12N 1/06

(54) **PCR-FREE SAMPLE PREPARATION AND DETECTION SYSTEMS FOR HIGH SPEED BIOLOGIC ANALYSIS AND IDENTIFICATION**
PCR-FREIE PROBENPRÄPARATIONS- UND PROBENNACHWEISSYSTEME ZUR BIOLOGISCHEN ANALYSE UND IDENTIFIZIERUNG MIT HOHER GESCHWINDIGKEIT
SYSTÈMES DE DÉTECTION ET DE PRÉPARATION D'ÉCHANTILLONS SANS PCR À DES FINS D'IDENTIFICATION ET D'ANALYSE BIOLOGIQUE DE VITESSE ÉLEVÉE

(30) Priority: 16.05.2006 US 747415 P; 11.10.2006 US 829079 P; 02.03.2007 WO PCT/US2007/063229
(43) Date of publication of application: 11.03.2009
(73) Proprietor: Arcxis Biotechnologies, Inc., Pleasanton CA 94566 (US)
(72) Inventor: HUKARI, Kyle, Wisdom, Dublin, CA 94568 (US); WEST, Jason Andrew, Appleton, Pleasanton, CA 94588 (US); LI, Dustin, Berkeley, CA 94704 (US); SATTERFIELD, Brent, Coleman, Pleasanton, CA 94566 (US); MAJLOF, Lars, L., Saratoga, CA 95070 (US)
(74) Representative: Hallybone, Huw George
(86) International application number: PCT/US2007/011853
(87) International publication number: WO 2007/136715

(56) References cited:
- WO-A-2006/036757
- US-A1- 2003 190 608
- US-A1- 2005 048 519
- US-A1- 2005 084 866
- US-A1- 2005 095 602
- ERICKSON AND LI: ANALYTICA CHIMICA ACTA, vol. 507, 2004, pages 11-26,

## Description

### STATEMENT OF GOVERNMENT INTERESTS

### FIELD OF THE INVENTION

The present invention is related to the field of microfluidic systems and methods of processing nucleic acids and other biomolecules for the detection and identification of biological entities such as infectious diseases and other bioagents.

### BACKGROUND OF THE INVENTION

Significant advancement of detection and identification of biological agents has been developed for centralized laboratory analysis; however, there currently exists few, if any, technologies that are cost effective for use in harsh environments. These environments include those experienced by first responders. The most commonly used tools for detection of biological agents in emergency responder situations are limited to assays, or devices, that offer only crude sample characteristics, such as pH or protein existence. Accordingly there is a need for systems, and particularly portable systems, that provide for the rapid (<5 min), specific (low false positive), and sensitive (femto molar, fM) identification of multiple biological threat agents. There is also a need for suitable systems to be constructed for rapid deployment, <5min from for use in harsh, point-of-incident, environments. (Emanuel shelf to operation, without the need for labor intensive set-up. Additionally, desired systems desirably do not require special storage (e.g., refrigeration).

The ability to detect, and *identify,* biological agents in a complex background, is not a simple task. The nature of biological analysis dictates that several steps must be employed. (Broussard 2001; Drosten, Kummerer et al. 2003). Currently, the steps required for high fidelity analysis and identification must be performed by a highly trained expert. Standard bench-top analysis of biological materials typically involves agent lysis (if the material contains a cellular organism), macromolecule (DNA or protein) extraction or amplification, clean-up, and derivatization, all followed by analytical analysis and further data processing. These steps each require a series of highly controlled tasks to limit sample degradation and/or data loss. Unfortunately, each of these tasks currently require significant time and expense to complete. With respect to the first responder, real-time point-of-incident analysis is critically important to limit additional casualties resulting from either an intentional or unintentional release of harmful biological materials. While devices have been developed for field portable detection, many of these devices continue to rely on complex biochemistry systems (i.e., PCR) that lack the stability for use in harsh, point-of-incident, environments.(Emanuel, Bell et al. 2003). As a result, there is a need for systems for analyzing biological agents that incorporates a complex set of steps required for low false positive identification. Desirable systems are also capable of being drop-test rugged and easy to use. US 2005/0084866 discloses methods and apparatus for nucleic acid detection without PCR.

Thus, there is a need for robust, easy to use systems that are capable of achieving a complex combination of functional requirements (*e*.*g*., specificity, dirty sample handling, automated, highly sensitive, and extensive multiplexing capability). Suitable systems need at least two basic components: (1) a robust novel assay to perform high fidelity bioagent identification; (2) a well engineered sample handling and detection platform.

### SUMMARY OF THE INVENTION

In overcoming the problems associated with a high throughput, low volume, microfluidic fluorescent detection platform the present invention is capable of performing multiple assays. The present invention provides, systems including a variety of integrated components, including lysing apparatus, fluid manipulation componentry comprising a series of pumps and valves, capillary holding, thermal control regions, an illuminator for providing photons, and a detector in optical communication with the capillary. The present invention is capable of providing essentially instantaneous detection of biological threat agents using an integrated sample preparation and discrete monolithic microarray device.

The present invention provides sample preparation and analysis systems suitable for conducting fluorescence based hybridization assays as defined in the claims, the sample preparation and analysis system comprising: a sample collection chamber capable of receiving a biological sample; a lysis chamber in fluidic communication with the sample collection chamber; a linear microfluidic array in fluidic communication with the lysis chamber; optionally, a conduit in fluidic communication between the lysis chamber and the linear microfluidic array; a sample preparation module capable of being in fluidic communication with the lysis chamber, the linear microfluidic array, the optional conduit, or any combination thereof, the sample preparation module capable of controlling temperature of the lysis chamber, the linear microfluidic array, the optional conduit, or any combination thereof; and an optical excitation and detection system that is in optical communication with the linear microfluidic array. The sample collection chamber, the lysis chamber, and optional conduit can be integrated on a card-type device. Also, the linear microfluidic array can be situated on a cartridge capable of being compression fit to a fluidic outlet port disposed on the card-type device. In several embodiments, the linear microfluidic array can comprise porous polymer media as a substrate for binding nucleic acid probes. In other embodiments the linear microfluidic array can comprise a linear flow channel narrower than about 250 microns. Also, the nucleic acid probes comprise one or more tentacle probes. Also, the optional conduit comprises a serpentine flow path. The linear microfluidic array can comprise a plurality of tentacle probes specific to a plurality of biological organisms. Likewise, the optical excitation and detection system can comprise a scanner capable of scanning said microarray with an excitation photon source to spatially resolve individual detection probes on said linear microarray. Suitablly, the scanner is capable of resolving from about 0.05 dye molecules to about 1 dye molecule per square micron of linear microarray area, which scanner detects bound target/probe complexes.

The present invention also provides methods of identifying one or more target biologic organisms as defined in the claims, comprising: lysing one or more cells or spores from one or more biologic organisms in a thermal lysing chamber to give rise to a lysate, said lysing giving rise to nucleic acids from said one or more biologic organisms; filtering said nucleic acids from said lysate; transporting said nucleic acids to a porous linear microarray, said porous linear microarray comprises a plurality of spatially positioned probes capable of hybridizing at least a portion of the nucleic acids from each of said target biologic organism and wherein the linear microarray comprises a porous polymer monolith that decreases diffusion time of the nucleic acids from the one or more target biologic organisms to hybridize with the probes, wherein the porous polymer monolith comprises nucleic acid probes that comprise one or more tentacle probes; hybridizing at least one nucleic acid from at least one of the target biologic organism to at least one of the probes; exciting the probes hybridized to at least one nucleic acid from at least one of the target biologic organism; detecting the spatial position of at least one of the excited probes on the linear microarray; and correlating the spatial position of the excited probe on the linear microarray to the identity of at least one of the cells or spores. In some embodiments, the linear microfluidic microarray comprises at least two distinct probes which are spatially resolved for detecting target analytes. In other embodiments, the linear microarray comprises a porous media that decreases diffusion time of the nucleic acids from the one or more target biologic organisms to hybridize with the probes. Also, a plurality of spatially positioned detection probes to test multiple analytes in a sample.

The present invention also provides sample preparation and analysis cards as defined in the claims suitable for conducting hybridization assays, the sample preparation and analysis system comprising: a lysis chamber capable of receiving a biological sample; a linear microfluidic array in fluidic communication with the lysis chamber, said linear microfluidic array comprising one or more tentacle probes bonded to porous media; and optionally, a conduit in fluidic communication between the lysis chamber and the linear microfluidic array. Preferably, the linear microfluidic array is disposed in a removable cartridge.

### BRIEF DESCRIPTION OF THE DRAWINGS

The foregoing summary, as well as the following detailed description, is further understood when read in conjunction with the appended drawings. For the purpose of illustrating the invention, there is shown in the drawings exemplary embodiments of the invention; however, the invention is not limited to the specific methods, compositions, and devices disclosed.

Fig. 1 is a top perspective of an embodiment of the sample preparation and analysis system of the present invention.

Fig. 2 is a top perspective of an embodiment of the sample preparation and analysis system of the present invention that shows the layout of the internal components.

Fig. 3 is a perspective of an embodiment of a sample collection and lysis chamber.

Fig. 4 demonstrates the ability to disrupt bacterial spores under various sonication powers.

Fig. 5 is a chart demonstrating the optimal conditions for spore lysis.

Fig. 6 is a slab gel highlighting the optimization of the DNA fragment size of these lysates after manothermosonication.

Fig. 7 is a top perspective of an assembled embodiment of the sample preparation and analysis system of the present invention.

Fig. 8 is a side perspective of an assembled embodiment of a sample preparation and analysis system of the present invention detailing the excitation and detection module.

Fig. 9 is a perspective of an assembled embodiment of a sample preparation and analysis system of the present invention detailing the microfluidic chip, along with another embodiment of the combined microarray chip and lyser .

Fig 10: is an embodiment of the present invention that relates to the fabrication of the porous polymer monoliths that are used for the probe attachment in the microfluidic chips used on a sample preparation and analysis system of the present invention.

Fig. 11 is an assembled embodiment of the present invention that relates to one assay that has been developed for use with a sample preparation and analysis system of the present invention.

Fig. 12. Is an assembled embodiment of a sample preparation and analysis system of the present invention both incomplete and complete with an integrated laptop computer.

Fig. 13: Is an assembled embodiment of a commander software system capable of controlling a sample preparation and analysis system of the present invention.

Fig. 14 depicts an assembled embodiment of a suitable commander software system capable of controlling a sample preparation and analysis system of the present invention.

Figs. 15A-E depict various views of an embodiment of a consumable card of the present invention that includes a lysis chamber, a serpentine cooling path, which is capable of being compression fitted to a cartridge comprising linear porous microarray: A - front view of the assembled consumable card; B - exploded view of the card base, filter, sample cap, fluidic sealing cap, and microarray cartridge; C - front view of fluidic sealing cap; D - internal view of fluidic sealing cap; E - back view of assembled consumable card.

Fig. 16 depicts an optics system suitable for exciting the probes located on a porous linear microarray; detecting fluorescence from an activated probe is also shown.

Fig. 17A-C depict front, perspective, and side views of a molecular capture cartridge comprising a linear porous microarray.

Fig. 18 depicts an embodiment of a single axis scanner suitable for coupling the optics system to scan and detect the position of fluorescent probes bound to the linear porous microarray.

Fig. 19 shows the results of injection of a single capillary volume of mRNAs and their subsequent trapping and release.

### DETAILED DESCRIPTION OF ILLUSTRATIVE EMBODIMENTS

Microfluidic componentry and methods are used to perform high-throughput analysis of biologics. Improved systems and methods that integrate a rapid, specific and sensitive assay scheme into a robust front-end sample preparation and back-end detection platform for use in rugged environments is presently needed. Systems are needed that are capable of remaining idle for months at time and can be ready to operate in five minutes or less when needed. For example, sample preparation and analysis systems are needed that enable the operator to perform an analysis in a three step process: (1) gather sample; (2) load; and (3) press start. In addition, the information reported should permit high consequence decisions to be made, demanding that the system's assay be specific and give correct high confidence information. These technical requirements are also desired in an assay and the system that are exceptionally robust. Accordingly, there is a need to develop systems and assay methods that are capable of having the following characteristics:

Ability to identify threats from near neighbors with high confidence.

Ability to analyze samples from complex or "dirty" samples.

Ability to perform analysis without external sample preparation steps.

Multiplex assay to ≥10 agents to include viruses, bacteria and protein biotoxins.

Develop an assay and platform that has no special storage requirements.

The ability to detect and identify specific organisms reliably can depend on the assay chosen. Polymerase chain reaction ("PCR") methodologies have been used in rapid detection assay platforms. However, there are several major drawbacks to using PCR in first responder scenarios. First, the specificity of the assay is dependant on the probe selection; until all organisms have had their DNA mapped, a single probe cannot be fully trusted. To decrease false positives, multiple probes are often used, but this only results in an additive increase in statistical probability of a positive detection. Second, the assay is enzyme dependant, which means that the sample needs to be "cleaned" for accurate results; a dirty sample can inhibit enzyme reactions and lead to costly false negatives. Third, the reagents used in the assay can not be reused and require special storage conditions; this makes the assay labor intensive and costly to maintain. To address the limitations of PCR assays, the system needs to be statistically proven to reduce false positives, able to accept dirty samples, and be inexpensive to run and maintain. Suitable systems and assays may, but will not necessarily require, the use of PCR.

**Ability to identify threats from near neighbors with high confidence**

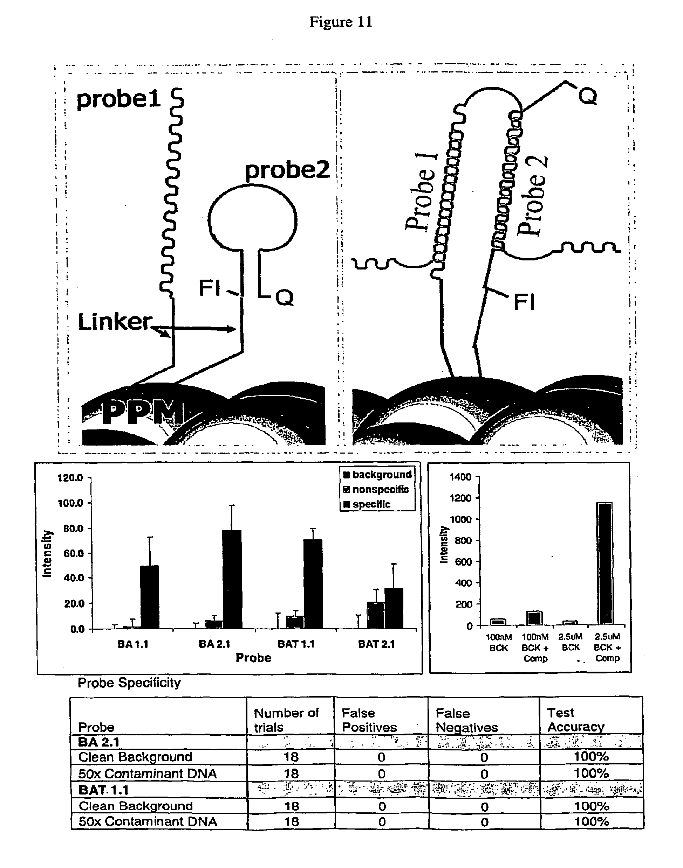

New methods of detection, referred to herein as Combinatorial Probe Analysis (CPA) has been developed by at least some of the present inventors, and disclosed in International Patent Application PCT/US07/63229, "Cooperative Probes and Methods of Using Them" by West et al., filed March 2, 2007. These methods allow multiple probes for the same organism to interrogate the same target DNA and give an exponential increase in the statistical sensitivity. The assay maintains ultra-fast hybridization rates and deviates from traditional platforms, such as microarrays, by creating a combinatorial probe, or simply, a homogenous mixture of multiple probes. The assay makes use of multiple capture probes, designed to detect a single gene or nucleic acid. These probes can be deposited in discrete regions of a microchannel containing a porous polymer monolithic (PPM) material. The sequences and arrangement of the nucleic acid probes will allow for the specific interrogation of selective sequences with high confidence. In this arrangement, a minimum of two nucleic acid sequences are provided that hybridize to a single sequence of nucleic acids in a solution (Figure 11). The proximity of the probes to each other allows for a single polynucleotide to bind to multiple probes, each screening for a different nucleotide sequence. Using this configuration the rate of hybridization, and, the number of nucleotides successfully bound increases (e.g. false negatives decrease). Most importantly false positives are statistically reduced. The advantage of CPA is that it requires two or more matches on the same target DNA, which nearly eliminates false positives. This capability arises from two technical features of the sample preparation and analysis systems.

One feature for decreasing false positive generation is a result of the position of the detection probes in a discrete microfluidic region. In this arrangement, the close proximity of the capture probes will dramatically reduce the production of false positive detection. Reducing false positives incorporates, *inter alia,* statistical models using computer simulated randomer generation to determine the rate of false positive generation. The model suitably uses a binomial distribution probability mass functions and incorporates truly random sequences, where each base pair is given a 25% chance of being present. The model allows for single nucleotide mismatches to be introduced in the statistical configuration, in addition to, controlling for probe and DNA target length, the number of randomers, and the number of probes to be used. It then compares the traditional method of analysis (single probe per analysis region) with our proposed method of combinatorial probes in a specific location. In this model, a 20bp probe was used with a maximum of one base pair mismatch as allowed. This model has demonstrated using two probes; there exists a 590,000 times higher probability of finding false positives in the traditional method when compared to the CPA method. To compare the two methods further, for every one probe using CPA it requires traditional assays 18 different probes to achieve the same reduction of false positives.

The second technical feature that decreases the probability of generating false positives is the effect of close proximity probe on the thermodynamics of the target probe interaction. In short, controlling the distance between the binding sites of the combinatorial probes increases the melting temperature of the hybridization, reducing non-specific target probe interactions. Longer nucleotide sequences generate a larger change in Gibbs Free Energy than shorter probes, and consequently, have a higher melting temperature. For example, a 20bp sequence might have a ΔG of 25kcal/mol versus approximately 55kcal/mol for a 40bp sequence. In one embodiment, a 40bp sequence separated in the middle by a single base pair generates a ΔG of nearly 55kcal/mol. Without being bound by any theory of operation, this change in free energy is due to the probability of reaction, in addition to, the actual amount of energy that comes from the reaction. In contrast, for a nucleotide sequence in free solution, the chance of encountering a probe with the correct orientation and energy is relatively low. However, once a nucleotide sequence binds to a probe, then the remaining sequences are tethered at a known distance, approximately equal to 0.34nm/base pair, providing a limited reaction sphere (Holden and Cremer, 2005). The combinatorial probes effectively increase the target nucleotide concentration and decreases the effect of entropy. In other words, the combinatorial probes at binding sites in a discrete microfluidic region increases the probability that the DNA will react with the probes in the vicinity. This translates to a larger ΔG, and consequently, a higher melting temperature. For a 100 bp separation of target sequences, we estimate a 34nm radius for a half-sphere reaction volume for the second binding event. This effectively increases the concentration of an analyte by five orders of magnitude, resulting in approximately a 10°C shift in melting temperature. Using CPA provides for controllable temperature based discrimination between nucleotide sequences greatly reducing false positive and false negative detection events.

Specific technical advancements in the optimization of hybridization assays for nucleic acid detection has been observed (West, Hukari et al. 2004). These hybridization assays make use of a novel porous polymer monolithic (PPM) material, that is formed in a microchannel, such as microfluidic chip or glass capillary. Compared to standard microarray platforms which require up to 14 hours to perform a single hybridization, (Li, Gu et al. 2002) the microchannel based PPM assay developed by the Arcxis Biotechnologies team performs the same hybridization in as little as two seconds. This can be achieved by increasing the probe surface area and reducing diffusion distances. In addition, the isolation of the nucleic acids appears to be specific as rarified sequences have been purified from a high background of nucleic acids and proteins. Using these capabilities, the assay platform provides important advances over current assay platforms, including assay speed, sensitivity, and specificity. Exemplary assay platforms are capable of reducing false positive detection events.

In summary, the CPA hybridization assay has several significant advantages over other molecular diagnostic assays. These include the following:

**Embodiments of the assays do not require an enzyme reaction (i.e.** PCR). Extensive sample clean-up is not required to perform the assay, as in PCR where removal of enzyme inhibitors from environmental or blood samples is critically important.

**Embodiments of the assays have a low false positive rate.** Making use of the CPA approach, this detection strategy was modeled to give rise to a false positive rate roughly four orders of magnitude lower than current single probe arrangements used in standard immunoassay, PCR and other microarray platforms. The CPA method further allows the ability to denature non-specific binding events due to the shift in free energy associated with a dual bound probe.

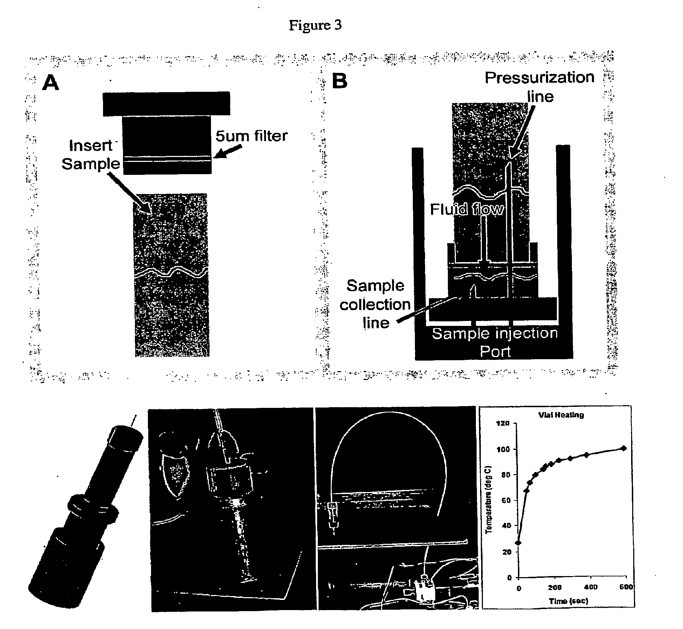

**Embodiments of the assays are extremely rapid.** The hybridization assays demonstrated with porous polymer monolith require two seconds or less to perform (Figure 3). Similar reaction kinetics will be possible with the combinatorial assay approach.

**Embodiments of the assays are sensitive.** Using the sample preparation and analysis system of the present invention, as low as 1-10 pg of nucleic acids has been detected on a particular region of a porous polymer monolith ("PPM."). This level of sensitivity is comparable to other standard assay platform designed for bench-top use. In addition, the assay can be operated in flow through mode and offer the capability of performing concentration to detection capability in one location

**Ability to analyze samples from complex or "dirty" samples**

One challenge in developing portable sensor platforms is making the front-end work in the field. A technical challenge encountered is the introduction of the sample to the analysis platform. Recently, a portable sensor was developed and deployed for the autonomous detection of proteins in drinking water (West, Harlodsen et al. 2005). In this system, the sample collection device limits the introduction of large particles, while allowing analytes of interest to be directly introduced to the analysis platform. Experimental results over more than one month of external field testing revealed the system was capable of collecting and analyzing samples without failure of the sample collection probe. The technical challenge in the proposed system is similar. However, one major difference is the sample collection system in the proposed device can be manipulated by an individual with limited dexterity due to the personal protective equipment needed in a hazardous environment. For this system, a sample collection system can be designed to allow the user to deposit a sample into a collection vial, and insert the sample vial into an analysis train. The sample vial can contain all necessary reagents, including buffers to prepare and analyze the sample. The user is able to simply scoop up a sample with the vial and vigorously shake the contents to achieve mixing with the reagents contained within a sample collection unit. The vial can contain a membrane to limit the introduction of particles to the analysis system to overcome a common failure mode of portable analysis platforms "-" clogging of the sample preparation and analysis train from large particles, such as dirt, sand, and other materials greater than 5um. Using this sample collection system, the user is able to collect either dry or liquid samples in the sample vial, mix, and insert the sample vial on to the analysis train. The analysis is will then be capable of drawing a sample from the vial and preparing the filtered sample for analysis in a completely automated fashion.

**Ability to perform analysis without external sample preparation steps**

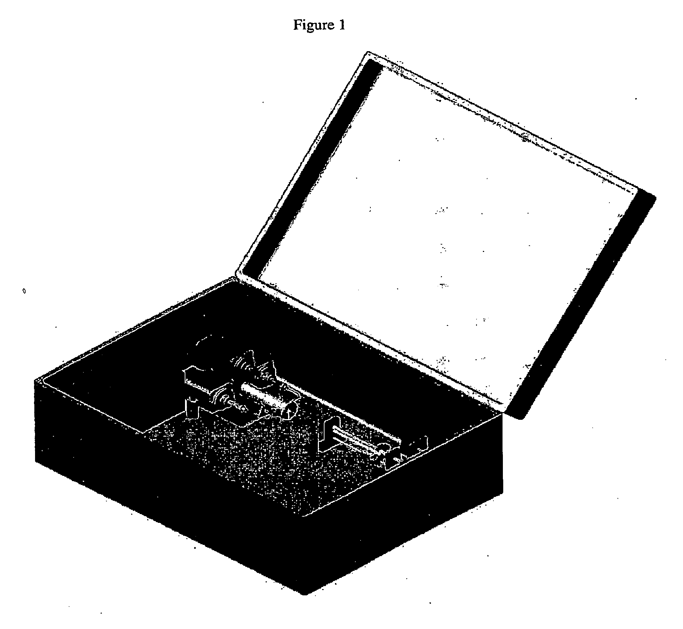

One embodiment of the system of the present invention is simple to operate, requiring fewer than five user steps to perform an analysis. These steps can include depositing a sample into a vial, loading the vial, and then performing a single-push button operation to run the analysis. The user then can remove the existing vial and perform a reset, or purge function, to begin the next analysis. The exemplary system (Figure 1) draws a sample into the loading syringe which can then re-direct the sample on to a microfluidic chip for analysis. The microfluidic chip can contain the lyser region and the PPM region. The microfluidic chip can have a lifetime of 10-15 analyses, roughly the number of analyses required for a single field deployment. The system is capable of replacing the chip component using a simple two step process.

To perform the analysis after the sample collection vial is inserted, the collected sample is drawn into the loading syringe where the sample is prepared for analysis. The samples first undergo thermal lysis to liberate intracellular macromolecules for analysis. This thermal lysis platform is capable of lysing and solubilizing a variety of organisms including the most robust of species--bacterial spores. Thermal lysis of biological agents is achieved by performing ultra high-temperature heating of a pressurized solution. Samples are pressurized in this platform due to the flow restriction created by the PPM. This technique of sample preparation can be used for a variety of analyses, including both protein and DNA. The fragmentation size of the intracellular DNA can be controlled with these methods. In this fashion, the lyser both achieves agent lysis, as well as, denaturation/fragmentation of the intracellular nucleic acids and protein solubilization. After achieving agent lysis, cellular macromolecules can be immediately directed to the PPM to undergo hybridization using the CPA platform. During the hybridization process, the temperature of the PPM can be controlled to facilitate maximal binding kinetics. Hybridized samples are detected when the nucleic acids in the sample interact with probe 2 of the CPA assay (Figure 1). The hybridization of the target nucleic acids with probe 2 allows the interrogation of the column using fluorescence. The samples can be detected using this molecular beacon structure, no prior sample processing (such as a covalent labeling step), other than buffering, is required, but may be used. This will allow the user to have the ability to directly introduce samples to the analysis platform without performing any external preparation steps, such as labeling with an external probe.

**Multiplex assay of a plurality agents to include viruses, bacteria and protein biotoxins**

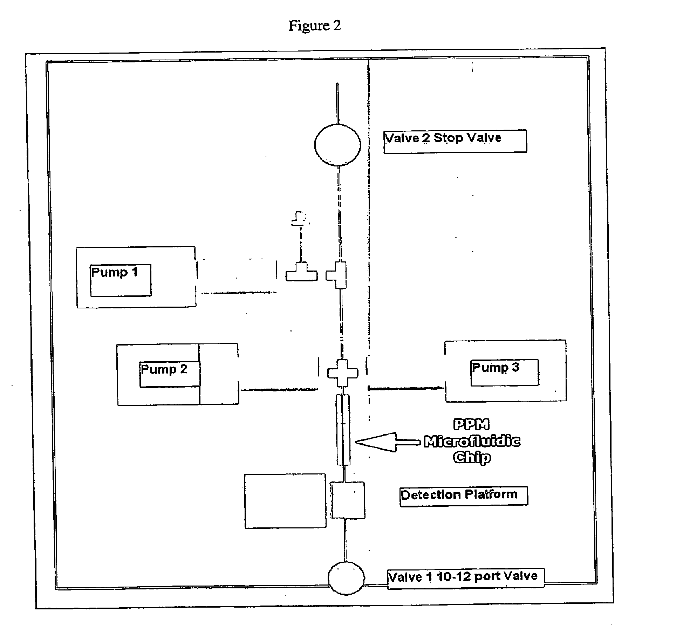

A desired specification of the system is the ability to multiplex the analysis to include a plurality of biological agents utilizing both DNA and protein. At least 2, 5, 10, 20, 50, or even at least 100 biological agents can be analyzed using these methods and systems. Multiplexed analysis can be achieved by creating an array of CPA detection regions on the PPM material (Figure 1). The material can be post-functionalized using a gycidyl-amine linking chemistry (Figures 1& 2). A variety of detection probe molecules can be deposited on the PPM material, including, for example, both oligonucleotides and proteins. A high density assay is provided to perform highly multiplexed analysis of threat agents. A process of selectively depositing an array of probes within a single discrete device is also provided. This process can employ selective photolithographic deposition of capture and detection probes, which process is able to provide a high density multiplexed assay (greater the 1000 CPA probe sets) on a single discrete 1.0 cm microchannel. The process can use a CPA assay to discriminate between groups of closely related organisms. This platform is capable of distinguishing between bacillus bacterial spores, *including bacillus subtilis, bacillus thuringensis,* and *bacillus atrophaeus* (*b. globigii*). For the detection of highly pathogenic and toxigenic agents, any of a variety of detection probes can be generated to compile multiple probe libraries for all category A, B, and C pathogens, such as taught in PCT/US07/63229, filed March 2, 2007. Suitable probes can be generated for non-pathogenic bacterial spores, pathogenic spores as well as other biological agents. Probe sets can also be provided to detect and identify live threat agents.

Combinatorial probes can also be provided for analyzing proteins. Protein binding exhibits a higher ΔG for the second binding event, as similarly occurs for polynucleotides. More than a two-fold increase in ΔG can occur for a dual probe binding assay for proteins. When changing from three to two spatial dimensions, the free energy change of the second binding event is much greater than the first because of the effective concentration of the protein increases at a specific location. This capability can allow incorporation of the protein and DNA assays on the same device, offering the ability to interrogate samples for any number of biological threats including bacteria, viruses and protein biotoxins.

**Develop an assay and platform that has no special storage requirements:**

One technical consideration for field portable devices is the stability of the reagent used in the analysis. The CPA hybridization assay methodologies described herein give rise to greater reagent stability. The reagents most commonly used for the detection of biological molecules are inherently unstable (i.e. thermostable enzymes and antibodies). The proposed platform does not necessarily require the use of active enzymes, or thermally sensitive reagents, rather the CPA makes use of multiple purified probes attached to a surface. PPM materials that are suitable for a variety of nucleic acids give rise to devices that have an extensive shelf life (e.g., greater than about six months) at room temperature. Further, the reagents within the columns can be stored dry to prevent degradation of the detection probes. Stored in this dry format, these materials are extremely robust, as they can be stored dry at room temperature for several months before use. Because of the greater complexity of the probe structure it is possible that the reagents maybe more labile. As a result, tests can be performed to determine the optimal storage conditions. Robust reagents can be developed this way to maintain optimal detection characteristics. For greater shelf life, the reagents are desirably kept out of direct sunlight before use.

The methods and systems disclosed herein have the ability to perform ultra-rapid and sensitive detection of single nucleic acids. The methods enable high-fidelity, low false positive detection of multiple agents on a single discrete device. The methods and systems provided herein incorporate a novel assay based on a dual probe arrangement. Suitable dual probes can eliminate the need to perform extensive preparation prior to performing analysis of the aforementioned sample. This novel assay will then be incorporated into one or more of the systems provided herein to allow for robust field use.

**Detailed Description of Illustrative Embodiments**

The present invention may be understood more readily by reference to the following detailed description of the invention taken in connection with the accompanying Figures and examples, which form a part of this disclosure. It is to be understood that this invention is not limited to the specific devices, methods, conditions, or parameters described and/or shown herein, and that the terminology used herein is for the purpose of describing particular embodiments by way of example only and is not intended to be limiting of the claimed invention. Also, as used in the specification including the appended claims, the singular forms "a", "an", and "the" include the plural, and reference to a particular numerical value indicates at least that particular value, unless the context clearly dictates otherwise. All ranges are inclusive and combinable. When such a range is expressed, another embodiment includes from the one particular value and/or to the other particular value. Similarly, when values are expressed as approximations, by use of the antecedent "about," it will be understood that the particular value forms another embodiment.

The microfluidic channel or assay capillary is capable of transporting an aqueous or gaseous sample. Typically the inner diameter of the fluidic channel or assay capillary is 5-1000 microns. In preferred embodiments the capillary can be located proximate illuminator and detector optical trains. The capillary can be held in place by pressure created with magnetic elements. Pressure sources suitably include: mechanical force, force created by weight, or any combination thereof.

The optical communication of photons emitted from the assay capillary or fluids therein can be accomplished using an optical coupling situated between the assay capillary and detector. Suitable optical couplings include an optical waveguide, a lens or series of lenses, an optical fiber bundle, a transparent (e.g. glass or plastic) rod, a fiber plate, an aperture, a filter set, or any combination thereof. In certain preferred embodiments of the present invention, the optical coupling includes a series of lenses including a series of filters. Suitable lenses provide an optical magnification of 1x to 100x, and most preferably 10x-40x. Suitable filters can block all or a portion of excitation light and pass all or a portion of emitted light. The illuminator and detection optical paths are suitably coincident between a dichroic filter and the assay capillary.

Suitable illuminators can be adjacently secured to the assay capillary to provide a source of excitation to the analyte molecules situated in the assay capillary. Typical illumination trains include one or more of the following: emission source, apertures, filter sets, and focusing optics. Suitable emission sources can be secured to a filter block and the light can be modified by an aperture. Suitable illumination sources typically include a light emitting diode (LED), a laser, an incandescent light source, a fluorescent light source, an electroluminescence light source, a plasma light source, a laser, or any combination thereof. In certain preferred embodiments of the present invention, the illuminator includes an LED or laser. Suitable LEDs or lasers are capable of emitting any of a variety of light wavelengths. Any variety of two or more light sources can be combined to provide further wavelength distribution to mix colors. For example light sources can be combined using a split fiber optic bundle connected to two LEDs, lasers, or any combination thereof.

After the capillary and internal reagents have been illuminated with an excitation source, any emission is detected. Suitable detectors are typically adjacent or optically connected to the capillary. Typical detection trains can include an excitation source (from analytes or molecules), apertures, filter sets, collection optics, and a suitable photon detector. The selection of the photon detector used allows for different types of detection. Examples of suitable photon detectors include photomultiplier tubes (PMT), avalanche photodiodes (APD), and charge coupled devices (CCD).

**Thermal Control of Detection.** The thermal control of the system allows for performance of standard assay methods as well as new and novel assay investigations. The temperature controller is included to control the temperature of the capillary before and during the detection. The temperature controller may be in direct or indirect physical contact with the capillary or it may be in radiative thermal contact with the capillary. As used herein "indirect contact" means that at least one other material is situated between the temperature controller and capillary, e.g. a plate or film. Temperature control can be achieved through a variety of methods, but not limited to: thermoelectric cooler (TEC), resistive heating, evaporative cooling, heat transfer fluids, or other refrigeration systems, and the like. A preferred method of temperature control is the use of a TEC. For precise temperature control it is preferable that the TEC be in close contact with the assay capillary so that the heating or cooling is achieved in a short period of time. Most typically the controller is capable of regulating the temperature of the capillary in the range of from about-25°C to 150°C. Controlling the temperature of the capillary is typically used for thermal reduction in capillary separations, and precise thermal control during nucleic acid interactions and hybridizations.

Control of temperature in distinct regions of the assay capillary acids in performing and optimizing chemical reactions. Between 1-1000 distinct regions of the assay capillary can be controlled in this capacity. More typically the number of temperature control regions is in the range of from about 1 to about 10. In a preferred embodiment there are 2 separate temperature control regions. Each TEC has its own control board and can be set for both heating and cooling. Control of the temperature in each region can be achieved by using thermistors, which measure the temperature by changes in voltage.

In certain embodiments of the present invention, the system further includes pressure control of the assay capillary. Suitable pressure controllers can include, syringe pumps, electrokinetic pumps, fluid flow pressure restrictions, or any combination thereof. The pressure control can be directly connected with the capillary. In some instances the pressure can also be controlled through the thermal control of a distinct region. Most typically the pressure control is capable of regulating the pressure from 0-32 atmospheres or 0-300psi.

In various embodiments in the present invention, there are also provided methods that include providing a system of the present invention, thermally controlling a microfluidic capillary, and detecting at least one fluorescent molecule.

The detection systems of the present invention need not only control the temperature, but may also control other variables such as pressure, dynamic flow, and buffer combinations on a single probe. As stated above, the temperature is controlled during hybridization, but the other factors may also be adjusted to optimize hybridization kinetics. Further optimization by one of ordinary skill can be undertaken to minimize reagent use. Working in microfluidic systems helps reduce the amount of reagent used, as compared to standard flat glass arrays and PCR assays. The devices and methods of the present invention make it possible to screen, capture and detect probes in series for optimal conditions.

**Types of Assays**

**Nucleic Acid Hybridization**

Efficient hybridization of nucleic acids incorporates precise thermal control of the fluids. A nucleic acid ("NA") sample is first denatured to open up its strands in preparation for hybridization. Preventing non-specific hybridization utilizing tight control of the temperature, e.g., a change of 10 degrees Celsius will allow a 1 base mismatch in a 20 base probe. As the detection probe is increased in length the temperature difference for a mismatch decreases, and the chance of nonspecific hybridization increases.

One application of the detection system of the present invention is nucleic acid (NA) analysis. NA hybridization can be done with a probe and a sample. The probe can be a set length oligonucleotide or chain ofNA bases. Typically the probe length is 15-1000 bases long. Typically as many as 1000 probes are used for biological agent detection. The sample is taken from a biological specimen including but not limited to: viruses, bacteria, tissue, blood, animal cells, and plant matter. The length of the sample NA is typically not tightly controlled and may vary from single base pairs up to full length gene sequences. Through sample preparation some control of the NA is possible, often this is a range of 20-10,000 bases. If the sample is longer than 500 bases long a melting temperature of 95 degrees Celsius is required to denature the sample prior to hybridization. If the probe is shorter than 500 bases then there is an increased chance of non specific binding. Probes shorter than the sample that is being interrogated can allow the probe to interrogate multiple intact sections of the sample NA.

Probes can be used in 2 possible ways, first in solution where they interact with the sample NA through diffusion and is dispersed throughout the sample. Secondly, probes can be attached to a fixed surface where the sample NA is allowed to come in contact with the probe. In either case the temperature of the probe and sample NA in solution is carefully controlled to very specific hybridization. The inventive systems of the present invention can be used for optimization of either fixed of free floating probes. Different probes can open up at different temperatures, which is dependant on the bases associated with the probe and anything that is connected with the probe, such as chemistry for connecting to a fixed surface or fluorescent probes. The temperature for conducting proper hybridization is preferably determined.

The first step in preparing sample NA for binding analysis is to denature the NA. At lower temperatures the NA helix forms duplexes, hairpin structures or super coils and is not available to interact with complimentary probe pairs. In standard benchtop procedures, denaturing can be performed by heating the sample at 95 degrees Celsius for 5 minutes. This assures that essentially all NAs have denatured and disassociated from their complimentary pair. Another critical temperature is the melting temperature of the probe. Above this temperature a specific hybridization event will not occur. In other words above the melting temperature hybridization with the probe will not occur.

**Capillary Electrophoresis**

Capillary electrophoresis can be performed by applying a voltage or current from an anode to cathode that are connected via a microfluidic channel or capillary. This voltage potential results in migration of charged species or colloidal particles, which migration causes the movement of ions through the channel. The speed of the migration, i.e., separation depends on the current across the separation channel. As the current is increased the separation takes a shorter time. The limiting factor for separation velocity is the resulting joule heating generated with high current flows. As heat is generated in the capillary bubbles form at high temperature points. The bubbles act as dielectric and force the current through a smaller path which generates higher temperatures. This cycle ends in the sealing of the capillary and ending the separation. By cooling the separation channel, heat generated during the separation is removed and higher voltages can be used, resulting in faster separations.

Cooled capillaries also increases resolution of the separation. The resolution of the sample is limited by the diffusion of the sample. The sample will naturally diffuse in the channel. There are two ways to limit the diffusion of the sample during a separation. The first is to complete the separation in a shorter time, reducing the time for diffusion to take place. The second is to decrease the temperature of the sample, which effectively slows diffusion. By reducing and controlling the temperature of the electropheretic separation higher voltages can be used and diffusion can be limited.

Temperature control for electrophoresis can also allow the use of alternate sieving materials, especially materials that would be affected by fluctuations in temperature. Specific control of distinct regions can also allow some sample preparation to be performed in the separation channel. For example, in DNA separations the sample can be denatured just before entering the sieving matrix. The detection systems of the present invention allow for new and novel techniques in separation technologies.

Capillary electro chromatography is a type of electrophoresis that may suitably be performed using packing material as a sieving matrix. Without being bound by any particular theory of operation, the zeta potential of the surface and the charge on the walls is used to separate the sample NA elements. In packed beds, the voltage is reduced further because much of the space is taken with the packed bed. Thermally controlled systems can greatly decrease separation times and reduce bubble formation.

Other potential assays that can be incorporated in the inventive methods include Capillary Zone electrophoresis (where the sample and fluid flow in different directions), Field flow fractionation, Iso electric focusing, proteomic binding events, and other chemical reactions.

ElectroKinetic pumping can also be used in various molecule transport schemes. High electric fields are used to pump fluids through packed beds, but there is still the problem of bubble formation. The zeta potential of the surface gives the efficiency of the packed bed. This zeta potential could be modified through temperature or pressure.

### EXAMPLES AND OTHER ILLUSTRATIVE EMBODIMENTS

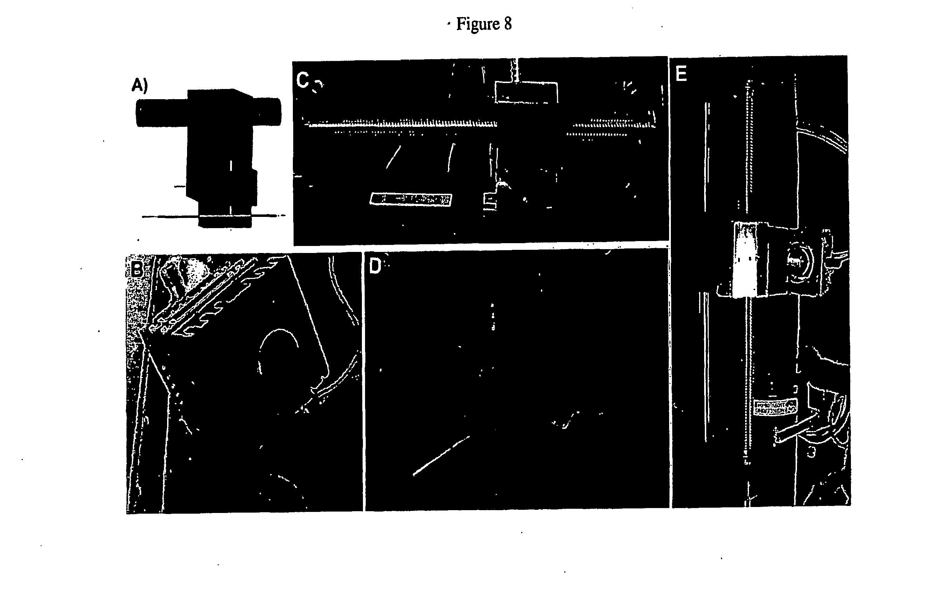

Figure 1 illustrates an embodiment of a nucleic acid detection system (1) of the present invention, which contains all the necessary control hardware and electronics to perform sample NA lysis, preparation and thermally controlled detection. This detection system embodiment is illustrated in Figure 11. Access to the internal components of the box is achieved by opening the lid of the enclosure. All controls are located within the enclosure, as seen in Figures 1 and 11. The thermal control and detection point connectivity is further detailed in Figures 2 and 8.

Figure 2 shows a schematic of one embodiment of an embodiment of a system. Thermal control of the TECs is achieved with thermal controllers, which are electrically controlled by internal card (5). The optic module is connected to the end plate via a one axis stage and is rastered along a cylindrical rail (7). This enables the scanning of the linear microarray device.

Figure 3 is a drawing of the sample lysis system employed in an embodiment of a detection system of the present invention. A disposable collection vial is provided to both contain the sample and perform sample lysis. The vial can be inserted in to a temperature controlled insert to warm the sample. When the vial has been inserted into the thermal controlled well, it will be pierced, then pressurized to allow for sample processing. With the vial pressurized and warmed, it is briefly sonicated by applying ultrasonic waves at the bottom of the vial or by inserting the tip of the horn directly into the solution. In this orientation, the sonication probe and vial interface which is not shown, is located at the bottom end of the sample collection interface. The temperature ramp time currently requires approximately 3 minutes to perform without sonication. Experiments are currently under development with the integrated lysing system to monitor the temperature during the lysis procedure.

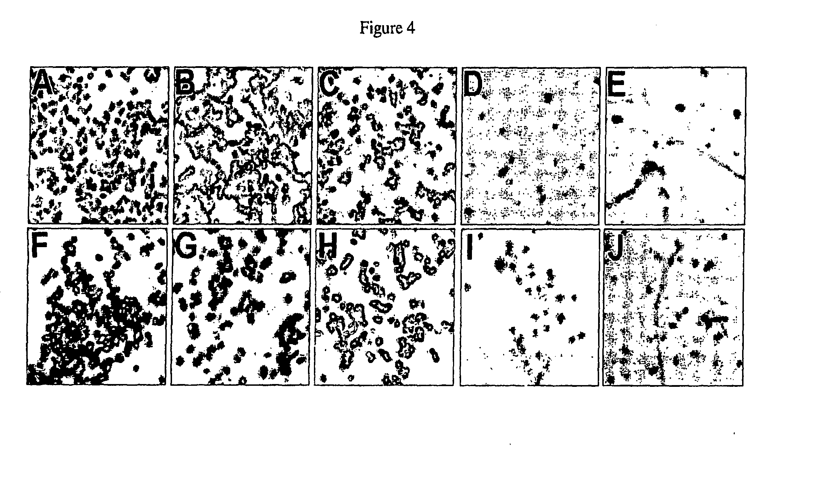

Figure 4 The following Figure demonstrates the use of the Arcxis sonication device. For each sample the vial was pressurized to approximately 100 PSI, heated to 95°C, then pulsed sonicated (10-3 sec cycles) at increasing power. Panels A-E are representative images from *Bacillus Atrophaeus* spores and panels F-J are representative images from the lysis of *Bacillus Thurengensis.* Panels A and F correspond to control, spores without disruption. Panels B and G show the results of the same spore solution being pressurized, heated and sonicated at approximately 5.5 watts. The total cycle time for each sample had a duration of one minute. As seen in Figure B&G, the spores appeared to consolidate and form clusters. This was more evident in the B. Atrophaeus spores at the 5.5 watt power setting. When the power setting was increased to 16.5 watts in panels C and H, this clustering continued. At this power setting the number of B. *Atrophaeus* appeared to decrease, while the clustering of the B. *Thurengenesis* spores appeared to increase. When the power was further increased to 33 watts (panels D&I), a dramatic decrease in spore counts was apparent. This was also evident at the highest setting tested, 49.5 watts, where the appeared striated formation that we are currently not able to Identify. All spores were imaged with a 40X objective using a Olympus BX41 microscope and an Olympus minispot camera.

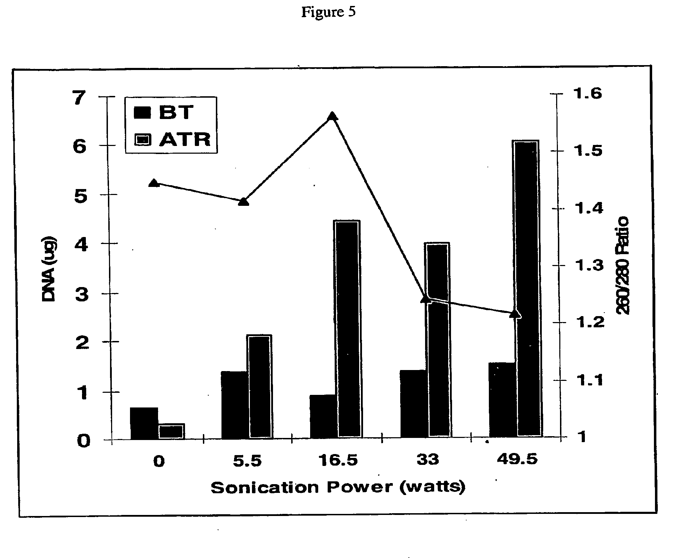

In Figure 5: An aliquot of the above sample was removed and analyzed on a Beckman spectrophotometer. DNA was quantitized using 260nm wavelength to access concentration and 280 to access DNA integrity. This data revealed DNA is released from the spores at increasing sonication power. By measuring both the total amount of DNA as well as the 260/280 ratio we have defined the optimal range for the release of the intracellular macromolecules from the spores. We found that a power of 16.5 watts released the highest amount of DNA from the *B. Atropheaus* spores (and also indicated DNA integrity was peaked at this power setting). The results for the *B. Thurengensis* (BT) spores were less well defined. While sonication appeared to release more DNA found in the control (0 power), the 260/280 ratio was poor for all samples. Defining the fragment lengths of released DNA at these power settings is one of our next steps. This will allow one to tailor the nucleic acids for integrated analysis.

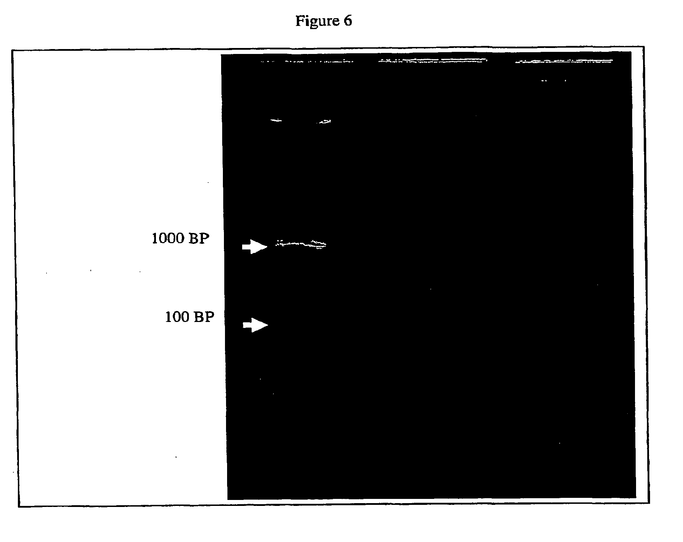

In Figure 6, the DNA fragment size of a variety of spore lysates were analyzed. The optimal power of the sonication device is centered between about 5.5 and about 16.5 W. Experimental results indicate that DNA fragments between 100 and 500 base pairs were present in samples from these lysates. The standard protocol for lysis of bacterial spores was compared. The standard procedure required over on hour of bench top steps and generated fragments between 100 and 10000 base pairs. In contrast, the inventive systems provided required less than 60 seconds to generate detectable DNA with fragments in the range that are optimial for both PCR and Microarray applications. Fragment sizes in this range are optimal for the detection of Bacillus spores using Real-time PCR analysis.

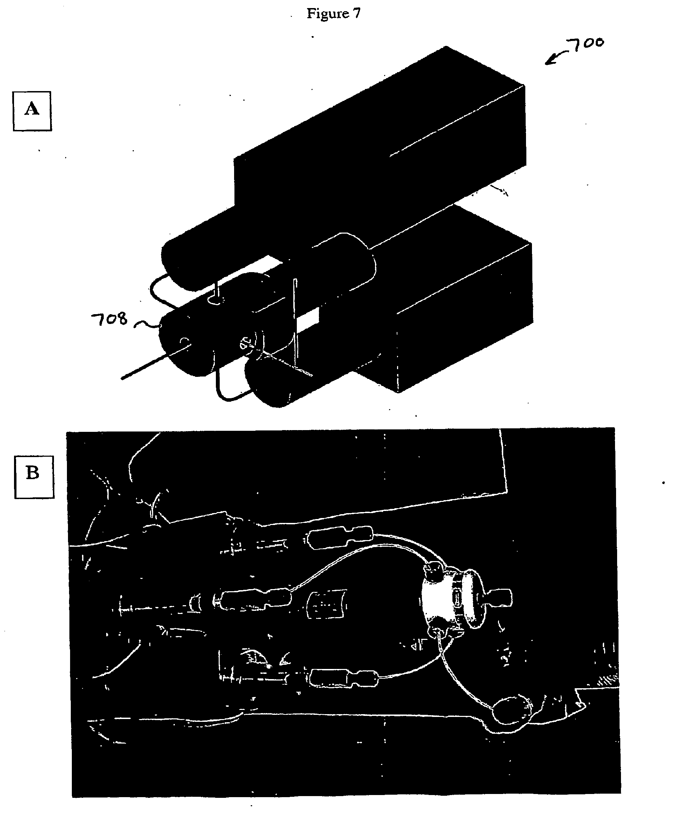

Figure 7 shows a pump and valve system 700 designed to draw a sample from the collection vial (not shown) (using pump 702), then redirect the sample through a valve (708) to the detection platform 706. The system 700 first introduces a prehybridization buffer (using the pump 710) to the detection column 712 to prepare the system to accept a sample. The prehybridization buffer can contain appropriate standard to ensure proper operation of the detection platform. When the target probe hybridization is complete, a third pump 714 elutes the non-specifically bound materials, then after the detection process is complete, elute the column to prepare for another analyses.

Figure 8 is a detailed illustration of the detection module 800. The base 802 has a groove 804 where a capillary 806 rests and is held in place by a top 808. The capillary 806 is held tight by silicon rods 810 , which insulate and withstand high temperatures. There are two separate heating sections 812. The sample 814 flows from left to right and flows across first, which in one embodiment is controlled to 95 degrees Celsius and denatures DNA. The temperature in this section can be controlled from below by a TEC 816 in direct contact with and held in place by the base802 . The temperature control of the detection section is controlled by a detection TEC 818 from above. The detection TEC is held in place by ???. The two TECs (816, 818) are separated to help mitigate cross talk when separate temperatures are required for each section. The detection module 800 has been designed to scan across the detection capillary (A) using a rotary drive mechanism 820 which collects excitation light using a miniaturized photon counting detection module (B). Using a dual fiber optic system 822 a specially shaped collection fiber 824 can be used to collect the majority emitted light from the section 826 of capillary being illuminated. The system can be assembled separately or together with the photon counting detection module. The optical module (D) is complete with two stage temperature using a thermoelectric cooler (TEC) 830 which controls the temperature of the capillary 806 and is illuminated (upon close observation) with a 635nm Laser Diode 832.

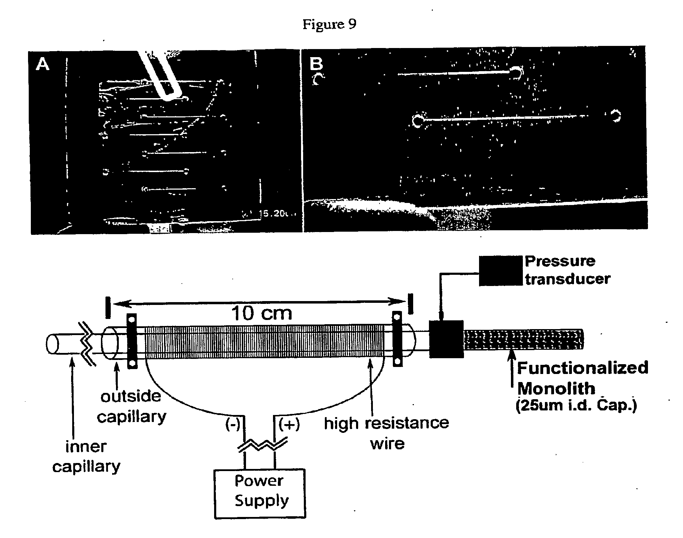

Figure 9 (A) demonstrates the fabrication of an embodiment of the microfluidic chips 902 used in one embodiment of the present invention. Microfluidic chips 904 were fabricated from Borofloat glass. These chip are designed to accept the deposition of detection probes in an open channel. These open channels are then sealed using a polymer film using a photocurable adhesive. The channels in these devices are 2.54 cm long, 500µm wide and 30 µm deep. The second panel in Figure 9 (B) shows an embodiment of the microfluidic chip that contains the lyser region and the Porous polymer monolith integrated onto one device. In this arrangement both Lysis and hybridization are carried out on the same consumable device. Suitable devices maybe consumable (i.e., disposable). This arrangement allows for rapid sample processing along with exquisitely sensitive detection.

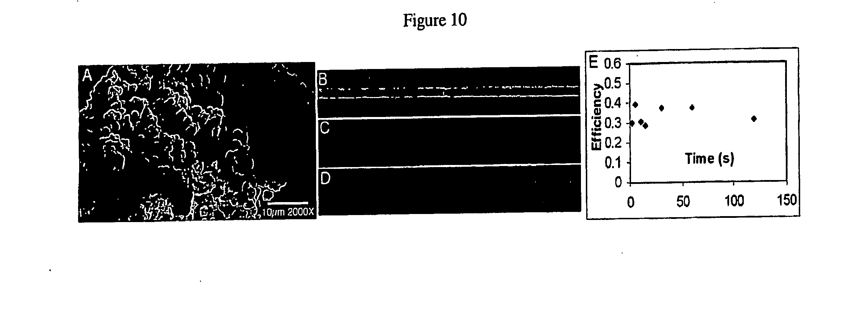

Figure 10 shows an embodiment of using porous polymer monolithic (PPM) material for the selective detection of nucleic acids sequences. The PPM is suitably a nodular high surface area material (A) which can be post fabrication functionalized to contain specific ligands to perform rapid hybridization assays. In this Figure, a mixture of DNA and RNA is introduced to the column (B) that appear as an orange fluorescent image. The PPM is then washed to remove unbound material (in this case the green labeled DNA), leaving RNA, which is labeled with a red fluorescent dye. Finally, the column is eluted (at 95°C) to remove the selectively bound RNA. The reaction is rapid (E), reaching maximal intensity within 2 sec. This demonstrates the ability to concentrate rarified nucleic acid sequences as only 1.0 ng of RNA was diluted in 1ug of DNA. The assay is capable of being exceptionally sensitive as a 200um section (gray box in B) of this capillary corresponds to the detection of a 1.0 pg of red labeled RNA.

Figure 11 is an embodiment of an assay which was developed for use with the sample preparation and detection system of the present invention. The results of the detection probes of the CPA assay show there is a significant shift in the fluorescence signal when the complementary DNA is present. In A) Probe BA 1.1 and BA 2.1 were designed to detect B. Anthracis. Probes BAT 1.1 and BAT 2.1 are designed to detect Bacillus Atrophaeus (globigii). Probe BA 1.1 and BA 2.1 were tested with DNA sequences from both B. Anthracis (Specific) and B. Atrophaeus (nonspecific). Probes BAT 1.1 and BAT 2.1 were also tested with B. Anthracis (nonspecific) and B. Atrophaeus (specific). Response data was corrected by subtracting the associated background signal. As seen, probe BA 1.1, BA 2.1, and BAT 1.1, responded very specifically to the target complementary DNA with no significant response to the non-complementary DNA. The shift in signal is substantial, indicating greater than an average 50:1 signal to noise ratio over the background. Some binding of the non-complementary DNA was also observed. In these experiments the non-complementary DNA was in 50 fold excess than the target DNA. For example, for probe BA 2.1, the non specific DNA was in 20uM concentration, the target B. Anthracis DNA was a 400nM concentration. The signal generated from this specifically bound probe was 13.2x higher than the non-specifically bound probe which was at a significantly higher concentration. Having demonstrated the high selectively of the detection probe we have now designed the cooperative capture probe to be associated with these assays. In Figure c) we demonstrate the response of the CPA detection probe to a higher concentration of target DNA. In this case the response was greater than 500 fold. An important note from these experiments was the level of background signal from the probes themselves. We noted that probe concentrations at both 100nM and 2.5 uM generated the same background signal. This means that the background signal is not an artifact of the probes themselves and is resulting from another source of background. One could expect to be able to determine and eliminate this source of background fluorescence, which will allow significantly more sensitive detection limits.

The chart at the bottom of Figure 10 reports the accuracy of the probes in clean and contaminant background. The contaminant background was Bacillus Atropheaus DNA for Anthracis probes and Anthracis DNA for Atropheaus probes.

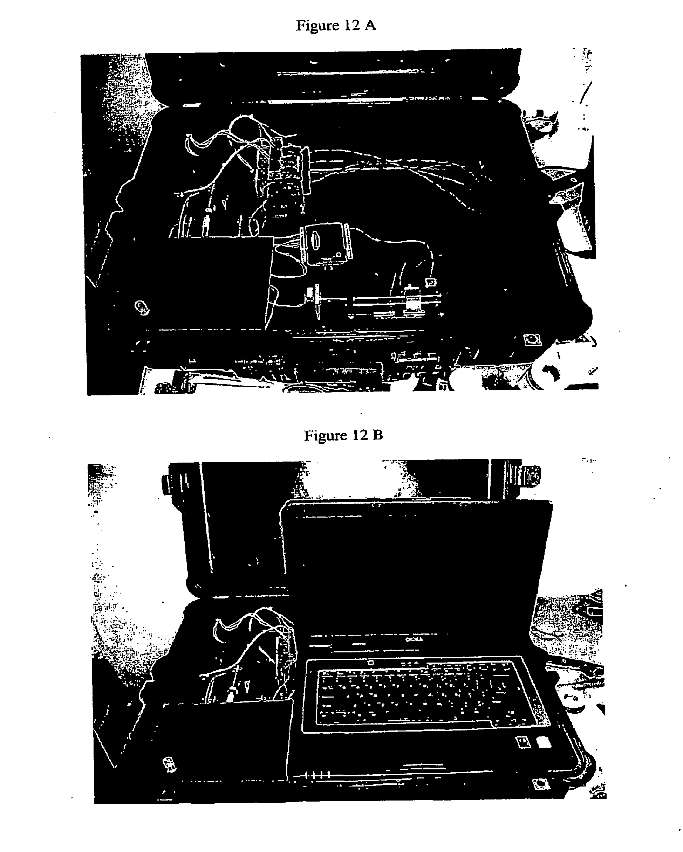

Figure 12 depicts an assembled embodiment of the system 1200 of present invention. DC power is connected to the system by a plug (not shown). Data acquisition is collected via USB connection to a computer 1202. The heating module/capillary holder is shown disassembled. The integration of the components of the sample preparation and detection system is shown. The system is encased in a 16"x 24"x 8" hardened plastic case 1204 for rugged field use. The system's functionality provides at least the basic process steps for field detection of biological agents, e.g., agent lysis, buffer addition, sample injection, system clean up, microarray detection and interpretation of the collected data. Components such as a power supply (not shown) can be integrated in the upper right hand corner of the device case, as well as a sonication module, if desired, and photon counting detection device. The system can provide two stage temperature control of the sample prior to being rastered by the detection module. This allows for full denaturation of the sample immediately prior to hybridization. These steps help achieve ultra rapid nucleic acid hybridization.

The system 1200 weighed less than 50 lbs when assembled. It is within the abilities of the art-skilled to decrease the system's size and weight. One system can be designed so the user will only see an injection arm, a vial holder, a reagent pack module and a user interface device (computer). Chip replacement in the system 1200 can require the user to remove the laptop computer 1202, but additional embodiments are within the scope of the art-skilled to make this an easily replaceable component. Integrated sample preparation and detection systems are capable of delivering an easy to use platform that can be operated in restrictive Personal protective equipment. The system can also, in some embodiments, be completely decontaminated, e.g. by submersing the device in a solution containing disinfecting chemicals such as bleach.

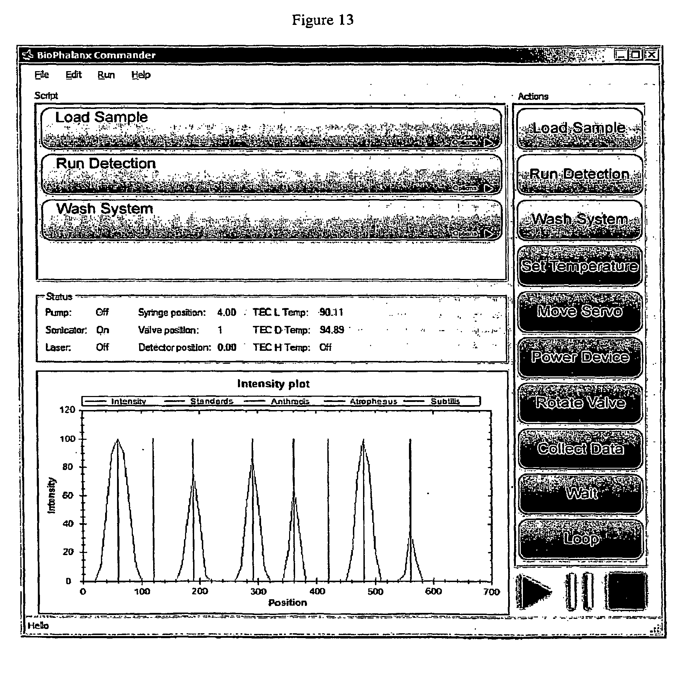

Figure 13 depicts an assembled embodiment of the present invention showing control software. The Software platform can be designed to both script custom analysis conditions, as well as single push button operations. The software buttons (in the right hand column) can be made large to allow user to operate the system using a touch screen, which can substitute for using a keyboard on a laptop computer. The data stream generated using this system can appear as an intensity plot based on spatial location on the capillary microarray device. The system can provide a full analysis of the sample with a spatial location scan and data interpretation within ten minutes. The assays as a discrete function and can be performed in as little as two seconds. Complete integration of the process steps including sample preparation, sample delivery, agent detection, and interpretation, results in the ability to perform sample to answer analysis within 10 minutes. A suitable software platform includes "LabView" from National Instruments. Additional software platforms can be designed and programmed, and compiled in C++. This can enable the streamlined operation of the device and its adaptation to a hardened touch screen computer to allow for field operation and aggressive decontamination.

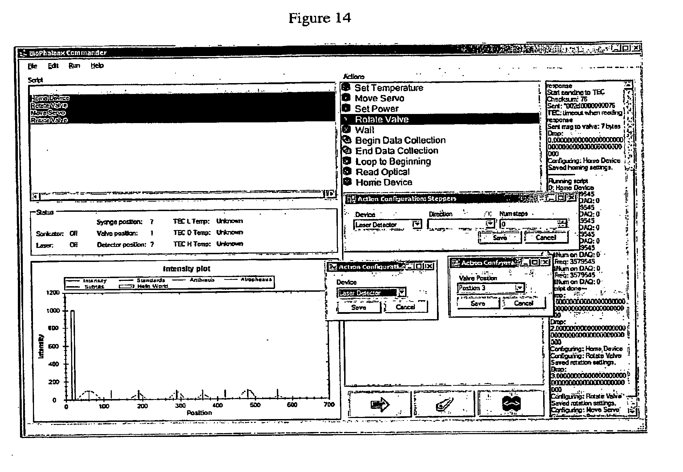

Figure 14 illustrates a section of an integrated subcomponent of suitable operating software used to control a sample detection and analysis system of the present invention.

Examples of use of a sample preparation and analysis systems are provided herein below.

**EXAMPLE I**

Examples for the use of sample preparation and analysis systems of the present invention are shown in the figures. An integrated detection apparatus can be used with a variety of sample matrices to perform fully automated sample preparation, hybridization and detection of sample analytes. Hybridization is accomplished using a linear porous microarray system, which dramatically reduces the diffusion distance and time to accomplish instantaneous capture and detection of the sample analyte. Detection of analytes is performed using an integrated fluorescence detection platform in combination with the use of nucleic acid and protein detection probes, including the use of Tentacle probes as described in "Cooperative Probes and Methods of Using Them", PCT/US07/63229, filed March 2, 2007. Claim 1 of said document discloses a tentacle probe for detecting the presence or absence of a target analyte in a sample, comprising: a detection probe comprising a first target binding region, wherein said detection probe is in an open conformation when bound to said target analyte and is in a closed conformation when not bound to said target analyte and wherein the change in conformation generates a change in detectable signal. Other capture probes can be added to create higher order tentacle probes. All of these detection probes can also be substituted with aptamer or antibody technology for use for the detection proteins. Additionally, any of these detection probes may be used in solution without the need of connecting to the linear microarray surface.

**EXAMPLE II** - **Sample preparation- cell suspension**

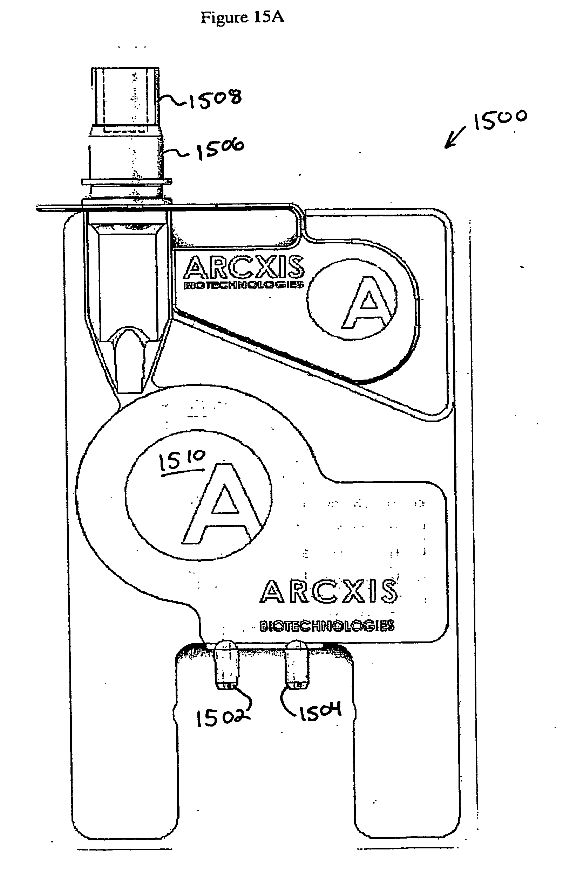

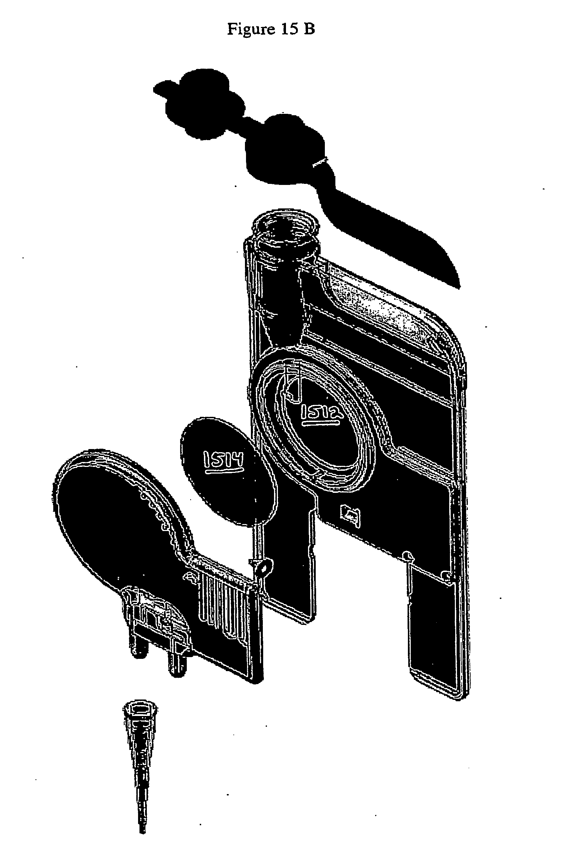

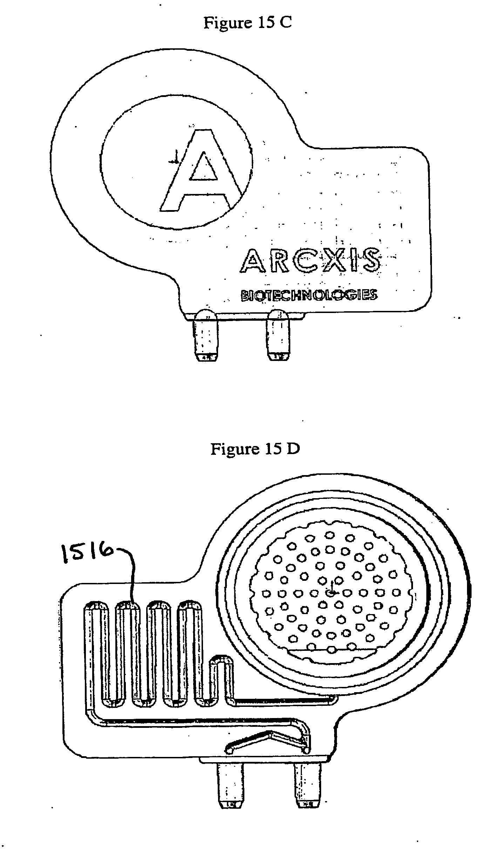

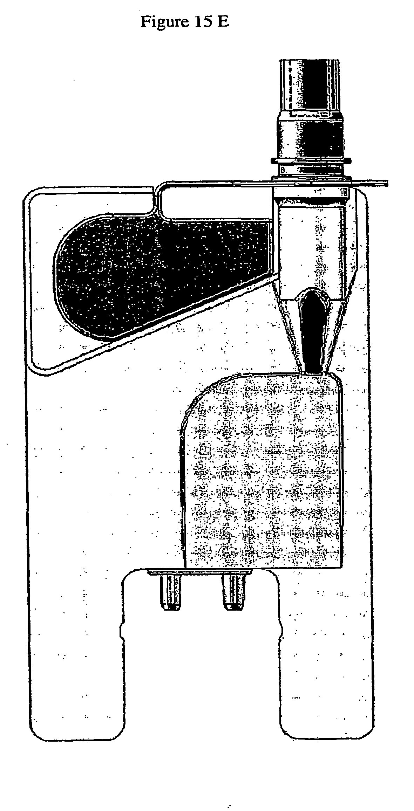

Using the sample preparation and analysis system, the time required for sample preparation is dramatically reduced. A variety of sample matrices can be applied to the sample preparation and analysis system platform using making use of the disposable card apparatus. One such example is the use of cells in suspension. A variety of cell suspension types can be prepared for analysis using the sample preparation and analysis system card. These include, bacteria cells, virus, eukaryotic cells, plant cells. In one such example hepatocytes is suspension are centrifuged to pellet the intact cells. One pelleted the cells are resuspended in buffer containing a detergent (Triton-X100), a salt (NaPO4, TMAC, NaCL) in buffered water (pH 7.4). Once in the lysis buffer the cell suspension is deposited in the sample vial located a the top of the consumable card (i.e., disposable card apparatus) as illustrated in Figures 15 **A-C****,** which depict front, exploded and back views of an embodiment of a consumable card of the present invention that includes a lysis chamber, and a serpentine cooling path, which is capable of being compression fit to a linear porous microarray. The vial is then capped, and the card is inserted into the sample preparation and analysis system instrument. Once inserted into the instrument, an automated script actuates several pumps to push the sample in to the lysis chamber, where the sample is heated to a temperature range between 50-110°C. During this process the intact cells undergo lysis. With lysis complete the sample is pushed through a filter (0.1 - 2.0 micron pore size). This procedure allows the sample analytes (RNA/DNA/ soluble proteins) to pass through the filter and continue to the analyte trapping region. Additional details concerning the sample preparation consumable cards and fluidic pump devices for manipulating biologic molecules can be found in United States Provisional Application No. 60/829,079, "Disposable Sample Preparation Cards, Methods And Systems Thereof", filed October 11, 2006, by Hukari et al..

**EXAMPLE III** -- **Sample preparation -- Tissue biopsy**

Another example is the use of tissue biopsies. A variety of tissue biopsy types can be prepared for analysis using the sample preparation and analysis system card. In one such example a sample containing biopsy liver cells are prepared and analyzed. The biopsy liver cells are resuspended in buffer containing a detergent (Triton-X100) and a salt (NaPO4, TMAC, NaCL) in buffered water (pH 7.4). Once in the lysis buffer the tissue suspension is homogenized using a Polytron homogenizer. The homogenized sample is then deposited in the sample vial located at the top of a consumable card, such as the one depicted in Figures 15 **A-C****.** The vial is then capped, a the card is inserted into to the sample preparation and analysis system instrument. Once inserted in to the instrument, an automated script actuates several pumps to transport the sample in to the lysis chamber, where the sample is heated to a temperature range between 50-110°C. During this process the intact cells undergo lysis and the sample material denatures into the native state to allow immediate analysis using the linear porous microarray located at the bottom of the consumable card. With lysis complete the sample is pressurized to flow through a filter (0.1 - 2.0 micron pore size). This procedure allows the sample analytes (RNA/DNA/ soluble proteins) to pass through the filter and continue to the analyte trapping region while retaining large particles and insoluble material.

**EXAMPLE IV - Sample preparation - Blood**
Another example is the use whole or fractionated blood. A variety of blood types can be prepared for analysis using the sample preparation and analysis system card. In one such example whole blood are resuspended in buffer containing a detergent (Triton-X100) and a salt (NaPO4, TMAC, NaCL) in buffered water (pH 7.4). Once in the lysis buffer the blood suspension is homogenized using a Polytron homogenizer. The homogenized sample is then deposited in the sample vial located a the top of the consumable card. The vial is then capped, a the card is inserted into to the sample preparation and analysis system instrument. Once inserted in to the instrument, an automated script actuates several pumps to push the sample in to the lysis chamber, where the sample is heated to a temperature range between 50-110°C. During this process the intact cells undergo lysis and the sample material denatures into the native state to allow immediate analysis using the linear porous microarray located at the bottom of the consumable card. With lysis complete the sample is pushed through a filter (0.1 - 2.0 micron pore size). This procedure allows the sample analytes (RNA/DNA/ soluble proteins) to pass through the filter and continue to the analyte trapping region while retaining large particles and insoluble material. In another example certain portion of the blood can be analyzed. In these cases, the whole blood will be first centrifuged to create fractions, which typically contain, plasma, buffy coat, and insoluble platelets. Any of the aforementioned fraction can be removed from the fractionated blood, suspended in the lysis buffer, then deposited into the sample preparation and analysis system consumable card, and then processed as previously specified.

**EXAMPLE V. Construction of a linear porous microarray.**

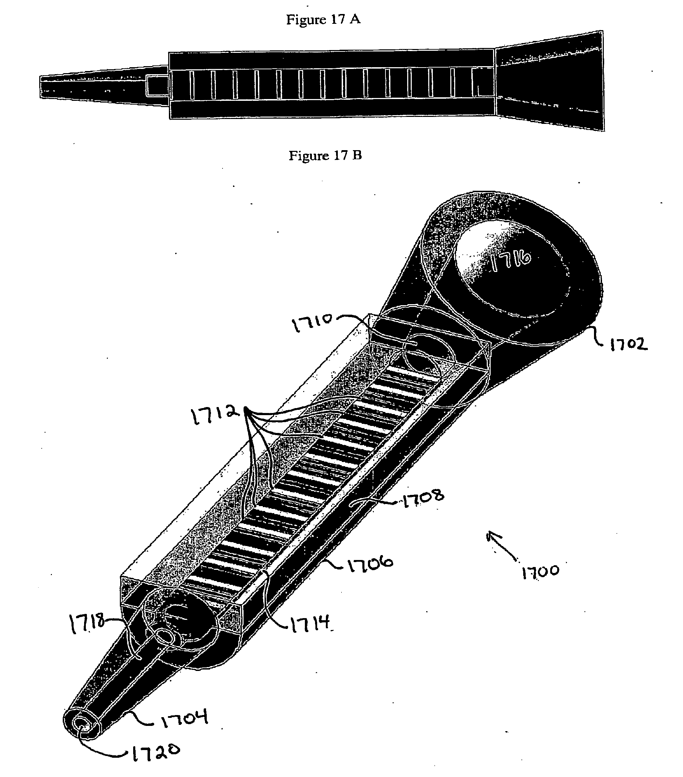

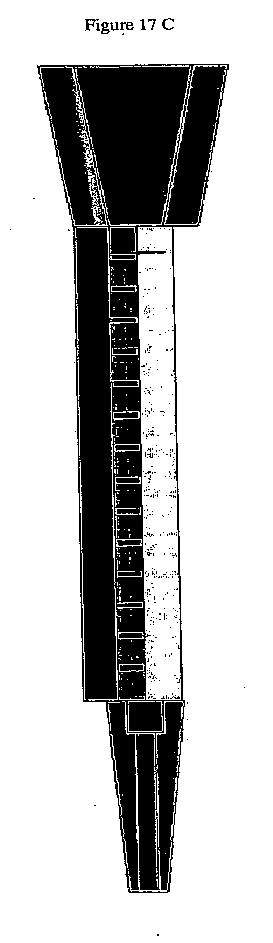

A linear porous microarray was constructed to facilitate rapid interrogation of sample analytes. Referring to Figures 17A, 17B and 17C, an exemplary example of the linear porous microarray is formed from the polymerization of methacrylate polymers. Further details concerning the polymerization chemistry for preparing porous polymer media ("PPM") can be found in U.S. Patent No. 6,472,443, "Porous Polymer Media", to Shepodd. The methacrylate monomers included in the solution contain glycidyl methacrylate (GMA), ethylene glycol dimethacrylate (EGDMA). During the polymerization reaction these monomers form a porous polymer network matrix which allows for the direct covalent attachment of amine terminated oligonucleotides. The monomer mixture contained 12.5 % v/v 10 mM NaH2PO4, pH 7.2, 12.5 % ethyl acetate, 40% methanol, 10.5 % GMA, 24.5 % EGDMA, also containing 2.5 mg Irgacure (Ciba Specialty Chemicals, McIntosh, AL). The solution was vortexed until the initiator was solubilized. The open channel was then filled and photopolymerized at 365 nm using a UV crosslinking oven (Spectronics Corporation, Westbury, NY) for 10 minutes. Once the polymer was formed the amine containing molecules are deposited on the polymer matrix. The reactive polymer was functionalized with primary amine with the oligonucleotide complete with a 5'NH3-C6 linker. To perform functionalization, oligonucleotides (500 µM) were dissolved in a buffer containing 10 mM phosphate buffer, 500 mM NaCl, 0.05-0.1% SDS. The oligonucleotides were then denatured before introducing them to the native PPM. The covalent attachment of oligonucleotides 1702 in Figures **17A, 17B** and 17C was made in a stripe pattern using a robotic spotter. The covalent attachment was optimized by performing a series of binding experiments with incubation temperatures of 60 °C, 90 °C and 120 °C for incubation times of 30, 60, and 120 minutes. The optimal conditions appeared to be 90 °C incubation for 60 minutes. The attachment of the oligonucleotide was confirmed by imaging fluorescently derivatized column. After confirmation of oligonucleotide attachment, the channel was sealed using a cover lid which was bound to the base substrate containing the porous polymer substrate.

**EXAMPLE VI. Sample hybridization using the linear porous microarray**

Sample hybridization: Prior to sample loading from the lysis chamber, the linear porous microarray 1712 as shown in Figure 17B was functionalized with oligonucleotide (not shown) and was blocked with 100 µL 10 mM Tris-HCl buffer in 180 mM NaCl and 0.1% SDS at 120 °C for 30 s. The solution was pumped through a fluid entry port 1504 at the bottom of the consumable card 1500 (see Fig. 15A). Once the linear porous microarray 1712 was blocked, the sample from the lysis chamber 1512 (see Fig. 15B) was pumped through the serpentine channel 1516 (see Fig. 15D) en route to the linear porous microarray 1712. This serpentine channel functions to cool the sample containing analytes to approximately 45°C prior to entering the linear porous microarray cartridge at 1716. As the sample passes through the linear porous microarray, the sample analytes hybridized to the oligonucleotides that are covalently linked on the porous polymer media 1714. When the hybridization is completed an additional wash step is conducted to remove non-specifically bound probes. The wash step was performed with 30 µL of 10 mM Tris-HCl buffer in 180 mM NaCl at 45 °C at a rate equivalent to the loading rate. When the washing was complete the sample was detected using a fluorescence imaging system.

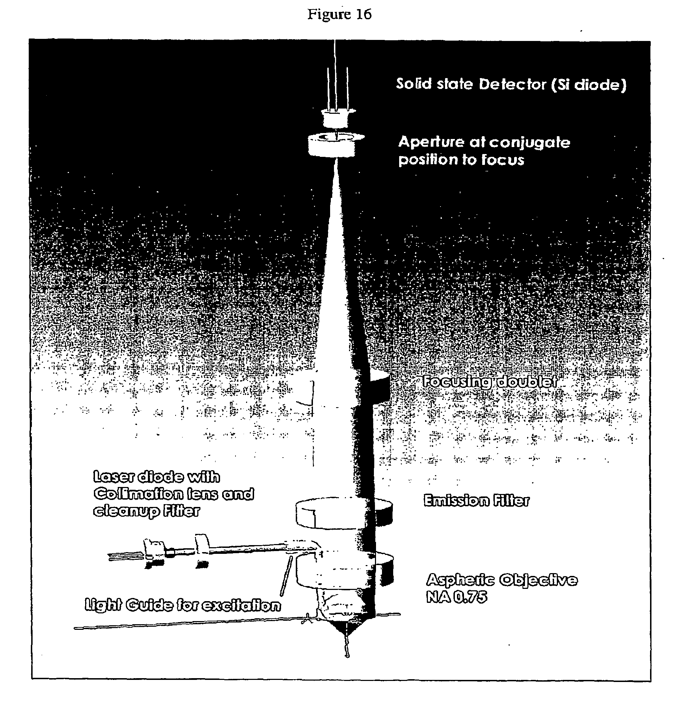

An illustration of a suitable collection and excitation optics system for use in the fluorescence imaging system is illustrated in Fig. 16, which depicts an optics system suitable for exciting the probes located on a porous linear microarray and detecting fluorescence from an activated probe.

**EXAMPLE VII. Sample hybridization using the linear porous microarray using tentacle probes.**

This example describes the use of tentacle probes on the surface of the linear porous microarray to hybridize nucleic acids from a biological sample. Tentacle probes contain both a fluorophore and a quencher. During the hybridization process, as the sample analytes bind to the tentacle probes the fluorophore and quencher separate spatially. This generates a detectable increase in fluorescence which is detected using the integrated optical assembly. Prior to sample loading from the lysis chamber, the linear porous microarray functionalized with Tentacle probes was blocked with 100 µL 10 mM Tris-HCl buffer in 180 mM NaCl and 0.1% SDS at 120 °C for 30 s. The solution was pumped through a fluid entry port at the bottom of a consumable card comprising the lysis chamber in fluid communication with the linear porous microarray. Once the linear porous microarray was blocked, the sample from the lysis chamber was pumped through the serpentine channel en route to the linear porous microarray. The serpentine channel functions to increase the hold time, thereby allowing the sample containing analytes to be cooled to approximately 45°C prior to entering the linear porous microarray. As the sample passes through the linear porous microarray, the sample analytes hybridize to the oligonucleotides that are covalently linked the polymer. When the hybridization was completed, an additional wash step was conducted to remove non-specifically bound probes. The wash step was performed with 30 µL of 10 mM Tris-HCl buffer in 180 mM NaCl at 45 °C at a rate equivalent to the loading rate. When the washing was completed the sample was detected using a fluorescence imaging system.

**EXAMPLE VIII. Sample hybridization using the linear porous microarray using a combination of oligonucleotides and tentacle probes.**

An exemplary example is the use of a combination of oligonucleotides linked to the surface of the linear porous microarray and tentacle probes to form a secondary sandwich type assay. In this arrangement, the oligonucleotides serve as a capture probe to secure the sample analytes to the surface, using hybridization (e.g., hydrogen bonding). The tentacle probes are then subsequently used to detect the presence of specific sample analytes. To conduct this assay we use the following steps. Prior to sample loading from the lysis chamber, the linear porous microarray that was functionalized with oligonucleotides was blocked with 100 µL 10 mM Tris-HCl buffer in 180 mM NaCl and 0.1% SDS at 120 °C for 30 s. The solution was pumped through a fluid entry port at the bottom of the consumable card comprising the lysis chamber in fluid communication with the linear porous microarray. Once the linear porous microarray was blocked, the sample from the lysis chamber was pumped through a serpentine channel en route to the linear porous microarray. This function allows for the sample containing analytes to cooled to approximately 45°C of the prior to entering the linear porous microarray. As the sample passed through the linear porous microarray, the sample analytes hybridizes to the oligonucleotides that are covalently linked the polymer. After sample hybridization, the column was first washed with 30 µL of 10 mM Tris-HCl buffer in 180 mM NaCl at 45 °C at a rate equivalent to the loading rate. When the washing was complete, a second hybridization was conducted. This second hybridization buffer contained a set of tentacle probe molecules designed to perform multiplexed analysis. Tentacle probes contained both a fluorophore and a quencher. During the second hybridization process, as the sample analytes hybridized the polymer bound oligonucleotides undergo a second binding reaction with the tentacle probes. As this second binding reaction occurs the fluorophore and quencher spatially separated. This generates a detectable increase in fluorescence which was detected using the integrated optical assembly described above. When this second hybridization was completed an additional wash step was conducted to remove non-specifically bound probes. The bound complex was then detected using the integrated fluorescence optical assembly.

**EXAMPLE IX. Detection of hybridized complexes on the consumable** card.

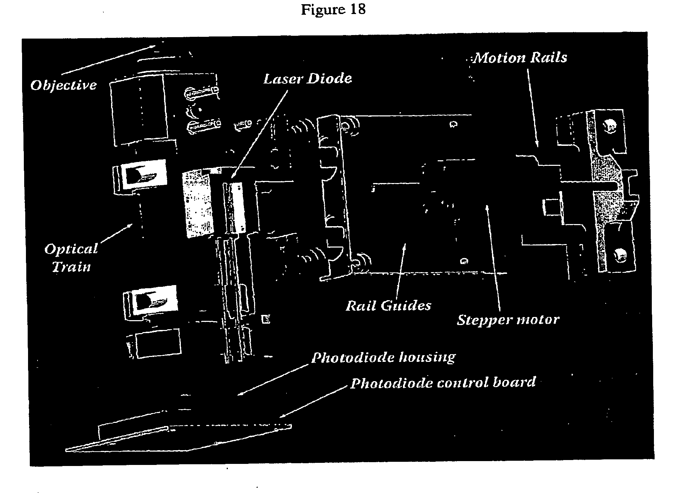

Bound complexes were detected using an integrated fluorescence optical assembly. The assembly was designed to eliminate stray light and to remove the requirement for dichroic mirrors, which would significantly increase the fluorescence background (ambient light) and effect detection sensitivities. Once the hybridization is complete the optical detection apparatus illuminates the linear porous microarray using a laser diode that is routed through the objective using a double-sided prism. This allows the excitation laser light to be transmitted to the linear porous microarray without requiring the excitation light to pass through a dichroic mirror. The excitation light then excites the fluorophores on the linear porous microarray. As the fluorophore produce emission light, it is transmitted down a collection tube which terminates at an aperture. The entire optical detection apparatus then rasters from one end of the linear microarray to the other to collect spatially resolved target bound complexes. A suitable scanning system is illustrated in **Figure 18****.**

**EXAMPLE X. Elution of bound complexes.**

An exemplary function of the sample preparation and analysis system of the present invention is the ability to perform melting curve analyses of the bound and complexed analytes on the surface of the linear porous microarray. Because the analysis of the sample analytes and probe is non-destructive the analytes can be subjected to melting curve analysis, while being optically integrated. This allows the user to perform post analysis, to ensure the results of the assay, and add in a secondary confirmation of the assay. Non-destructive analysis also allows the user to be able to collect the samples analytes to confirm the identity of the sample analytes using alternative and secondary methodology. This is often important in forensic applications.

**EXAMPLE XI.**

Oligonucleotide hybridizations were carried out by first performing a blocking step to prevent nonspecific binding using a blocking buffer containing 5-10 mM Tris buffer pH 9.0, 0.05-0.1% SDS, 0.1 mM BSA and ethanol amine. After blocking was complete 0.5-1.0 uL of mRNA containing sample was pumped through the capillary in order to remove the concentration gradient appearing from reagent mixing in the microfluidic T.

During loading, the capillary was maintained at a temperature well above the theoretical melting temperature for hybridization, to avoid mRNA annealing. Once the mRNAs were loaded, the capillary was removed from heat for a period of time ranging from 2-600 seconds. After this incubation at room temperature, the monolith was flushed with 5 uL of washing buffer and imaged using a fluorescent scanner. The average fluorescent intensity across the length of the capillary was noted for each hybridization time. A relative efficiency was calculated for each trial by using the expression (W-C)/(L-C), where W is the fluorescent intensity of the washed and trapped mRNA, L is the loaded intensity and C is the control intensity with no mRNA. Bound mRNAs were then eluted with <5 uL of buffer over 2 minutes at 90 °C by placing the capillary directly on the heating block.

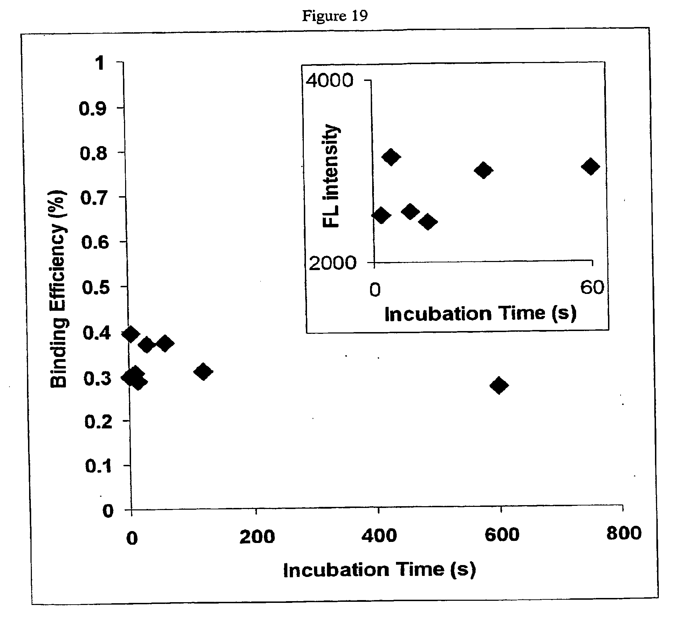

The primary objective of these studies was to demonstrate the ability to trap, concentrate, and select specific nucleotide sequences. With the monolith optimally , functionalized, the ability of the columns to trap and release sample mRNA was then tested. An experimental configuration was set up using a microfluidic junction and syringe pumps to allow repeatable experimental conditions. The T-junction had two points of entry and one exit. In this arrangement one connection was used to load the mRNA samples, while the other, which contained the sample buffer only, was used to wash and elute the loaded sample. To the third connection a capillary functionalized with oligonucleotide was inserted. This microfluidic setup allowed precise control over the amount of time allowed between load, wash and elution steps. A heating block, verified at 90 °C with a thermocouple, was placed within easy access to be able to apply and remove heat to the capillary virtually instantaneously. Figure 19 shows the results of injection of a single capillary volume of mRNAs and their subsequent trapping and release. Prior to loading the capillary with labeled Alexa fluor 647 mRNA, the capillary was imaged (Figure 19A). No fluorescence was detectable in the absence of labeled mRNA. The gain and contrast were set so that the control would barely be visible and were kept constant for the remaining images.

Having optimized the conditions for binding, washing and elution of purified mRNA, we then focused on determining and optimizing reaction kinetics. We found in our experiments there was no visible trend in hybridization efficiency over time. In fact, the efficiency of trapping with a hybridization time of ten minutes appears to be the same, or perhaps a little less, than the efficiency of trapping with an incubation time of two seconds. The other trials with hybridization times of 5, 10, 15, 30, 60, and 120 seconds together with the previously mentioned two trials appear to form a linear pattern with no slope (significance of coefficient from 2 to 120 seconds, p = 0.962) scattered about an average efficiency of 33%. The lack of any increase in efficiency with time demonstrates hybridization is complete at the initial time point measured, two seconds.

The same procedure was used to test and measure 40mer oligo efficiencies. The 40mers also demonstrated a linear pattern of efficiency with no apparent slope (significance of coefficient from 2 to 120 seconds, p = 0.867). In contrast to the 30mer oligonucleotide, the scatter plot is centered about an efficiency of 50%. The ratio of the average efficiencies demonstrates that the 40mer functionalized monolith binds with 1.5 times the efficiency of the 30mer characterized monolith. Without being bound by any particular theory of operation, we believe the results are due to a greater change in free energy than the 30mer in hybridization with its RNA counterpart.

The invention is not limited to single point detection. It can be modified to monitor an extended channel for an array or multiple capillaries. The detection platform can be modified to raster in two planar (x and y) directions, to provide spatial resolution of specific locations in the microfluidic channel.

## Claims

1. A sample preparation and analysis system suitable for conducting fluorescence based hybridization assays, the sample preparation and analysis system comprising:
a sample collection chamber capable of receiving a biological sample;
a lysis chamber in fluidic communication with the sample collection chamber;
a linear microfluidic array in fluidic communication with the lysis chamber wherein the linear microfluidic array comprises a porous polymer monolith as a substrate for binding nucleic acid probes, wherein the porous polymer monolith comprises nucleic acid probes that comprise one or more tentacle probes;
optionally, a conduit in fluidic communication between the lysis chamber and the linear microfluidic array;
a sample preparation module being in fluidic communication with the lysis chamber, the linear microfluidic array, and the conduit if present, or any combination thereof, the sample preparation module is capable of controlling temperature of the lysis chamber, and
an optical excitation and detection system that is in optical communication with the linear microfluidic array.

2. The sample preparation and analysis system of claim 1, wherein the linear microfluidic array is situated on a cartridge capable of being compression fit to a fluidic outlet port disposed on the card-type device.

3. The sample preparation and analysis system of claim 1, wherein the linear microfluidic array comprises a linear flow channel narrower than 250 microns.

4. The sample preparation and analysis system of claim 1 wherein the optional conduit comprises a serpentine flow path.

5. The sample preparation and analysis system of claim 1, wherein the linear microfluidic array comprises a plurality of tentacle probes specific to a plurality of biological organisms.

6. The sample preparation and analysis system of claim 1, wherein the optical excitation and detection system comprises a scanner capable of scanning said microarray with an excitation photon source to spatially resolve individual detection nucleic acids probes on said linear microarray.

7. The sample preparation and analysis system of claim 6, wherein the scanner is capable of resolving from 0.05 dye molecules to 1 dye molecule per square micron of linear microarray area.

8. The sample preparation and analysis system of claim 7, wherein scanner detects bound target/nucleic acid probe complexes.

9. The sample preparation module of claim 1, wherein the sample preparation module is capable of controlling the temperature of the lysis chamber, the linear microfluidic array and the conduit.

10. A method of identifying one or more target biological organisms, in the absence of polymerase chain reaction, wherein the method comprises:
lysing one or more cells or spores from one or more biologic organisms in a thermal lysing chamber to give rise to a lysate, said lysing giving rise to nucleic acids from said one or more biologic organisms;
filtering said nucleic acids from said lysate;
transporting said nucleic acids to a porous linear microarray, wherein said porous linear microarray comprises a plurality of spatially positioned probes capable of hybridizing at least a portion of the nucleic acids from each of said target biologic organism and wherein the linear microarray comprises a porous polymer monolith that decreases diffusion time of the nucleic acids from the one or more target biologic organisms to hybridize with the probes, wherein the porous polymer monolith comprises nucleic acid probes that comprise one or more tentacle probes;
hybridizing at least one nucleic acid from at least one of the target biologic organism to at least one of the probes;
fluorescently exciting the probes hybridized to at least one nucleic acid from at least one of the target biologic organism;
detecting the spatial position of at least one of the excited probes on the linear microarray; and
correlating the spatial position of the excited probe on the linear microarray to the identity of at least one of the cells or spores.

11. The method of claim 10, comprising a plurality of spatially positioned detection probes to test multiple analytes in a sample.

## Patentansprüche

1. Probenherstellungs- und Analysesystem, das für die Durchführung fluoreszenzbasierter Hybridisierungsassays geeignet ist, wobei das Probenherstellungs- und Analysesystem Folgendes umfasst:
eine Probensammelkammer, die eine biologische Probe aufnehmen kann,
eine Lysekammer in Flüssigkeitskommunikation mit der Probensammelkammer,
einen linearen mikrofluidischen Array in Flüssigkeitskommunikation mit der Lysekammer,
wobei der lineare mikrofluidische Array einen porösen Polymer-Monolithen als Substrat für die Bindung von Nukleinsäuresonden umfasst, wobei der poröse Polymer-Monolith Nukleinsäuresonden umfasst, die eine oder mehrere Tentakel-Sonden umfassen,
gegebenenfalls eine Leitung in Flüssigkeitskommunikation mit der Lysekammer und dem linearen mikrofluidischen Array,
ein Probenherstellungsmodul in Flüssigkeitskommunikation mit der Lysekammer, dem linearen mikrofluidischen Array und der Leitung, falls vorhanden, oder mit einer beliebigen Kombination von diesen, wobei das Probenherstellungsmodul in der Lage ist, die Temperatur der Lysekammer zu regeln, und
ein optisches Anregungs- und Nachweissystem, das sich in optischer Kommunikation mit dem linearen mikrofluidischen Array befindet.

2. Probenherstellungs- und Analysesystem nach Anspruch 1, wobei sich der lineare mikrofluidische Array auf einer Kartusche befindet, die druckschlüssig an einen auf der platinennartigen Vorrichtung platzierten Flüssigkeitsauslass angepasst werden kann.

3. Probenherstellungs- und Analysesystem nach Anspruch 1, wobei der lineare mikrofluidische Array einen linearen Fließkanal umfasst, der enger als 250 Mikrometer ist.

4. Probenherstellungs- und Analysesystem nach Anspruch 1, wobei die optionale Leitung einen serpentinenförmigen Fließweg umfasst.

5. Probenherstellungs- und Analysesystem nach Anspruch 1, wobei der lineare mikrofluidische Array eine Mehrzahl an Tentakel-Sonden umfasst, die für eine Mehrzahl an biologischen Organismen spezifisch sind.

6. Probenherstellungs- und Analysesystem nach Anspruch 1, wobei das optische Anregungs- und Nachweissystem einen Scanner umfasst, der in der Lage ist, den Mikroarray mit einer Anregungsphotonenquelle abzutasten, um einzelne Nachweis-Nukleinsäuresonden auf dem linearen Mikroarray aufzulösen.

7. Probenherstellungs- und Analysesystem nach Anspruch 6, wobei der Scanner in der Lage ist, 0,05 Farbstoffmoleküle bis 1 Farbstoffmolekül pro Quadratmikrometer der Fläche des linearen Mikroarrays aufzulösen.

8. Probenherstellungs- und Analysesystem nach Anspruch 7, wobei der Scanner Komplexe aus gebundenem Ziel/Nukleinsäuresonde nachweist.

9. Probenherstellungs- und Analysesystem nach Anspruch 1, wobei das Probenherstellungsmodul in der Lage ist, die Temperatur der Lysekammer, des linearen mikrofluidischen Arrays und der Leitung zu regeln.

10. Verfahren zum Identifizieren eines Zielorganismus oder mehrerer Zielorganismen in Abwesenheit einer Polymerasekettenreaktion, wobei das Verfahren Folgendes umfasst:
Lysieren einer oder mehrerer Zellen oder Sporen aus einem biologischen Organismus oder mehreren biologischen Organismen in einer thermischen Lysierkammer, so dass ein Lysat erhalten wird, wobei das Lysieren zu Nukleinsäuren von dem einem biologischen Organismus oder den mehreren biologischen Organismen führt,
Abfiltrieren der Nukleinsäuren von dem Lysat,
Überführen der Nukleinsäuren auf einen porösen linearen Mikroarray, wobei der poröse lineare Mikroarray eine Mehrzahl an in Abständen voneinander positionierten Sonden umfasst, die in der Lage sind, an mindestens einen Teil der Nukleinsäuren von jedem biologischen Zielorganismus zu hybridisieren, und wobei der lineare Mikroarray einen porösen Polymer-Monolithen umfasst, der die Diffusionszeit der Nukleinsäuren aus dem einen biologischen Zielorganismus oder den mehreren biologischen Zielorganismen für das Hybridisieren mit den Sonden verringert, wobei der poröse Polymer-Monolith Nukleinsäuresonden umfasst, die eine oder mehrere Tentakel-Sonden umfassen,
Hybridisieren mindestens einer Nukleinsäure aus mindestens einem biologischen Zielorganismus an mindestens eine der Sonden,
zur Fluoreszenz Anregen der Sonden, die an mindestens eine Nukleinsäure aus mindestens einem biologischen Zielorganismus hybridisiert haben,
Nachweisen der räumlichen Position von mindestens einer der angeregten Sonden auf dem linearen Mikroarray und
Korrelieren der räumlichen Position der angeregten Sonde auf dem linearen Mikroarray mit der Identität mindestens einer der Zellen oder Sporen.

11. Verfahren nach Anspruch 10, das eine Mehrzahl an in Abständen voneinander positionierten Nachweissonden zum Testen mehrerer Analyten in einer Probe umfasst.

## Revendications

1. Système de préparation et d'analyse d'échantillons propre à réaliser des dosages par hybridation basés sur la fluorescence, le système de préparation et d'analyse d'échantillons comprenant :
une chambre de collecte d'échantillon susceptible de recevoir un échantillon biologique ;
une chambre de lyse en communication fluidique avec la chambre de collecte d'échantillon ;
un réseau microfluidique linéaire en communication fluidique avec la chambre de lyse, le réseau microfluidique linéaire comprenant un monolithe polymère poreux comme substrat pour fixer des sondes d'acide nucléique, le monolithe polymère poreux comprenant des sondes d'acide nucléique qui comprennent une ou plusieurs sondes tentaculaires ;
éventuellement, un conduit en communication fluidique entre la chambre de lyse et le réseau microfluidique linéaire ;
un module de préparation d'échantillon en communication fluidique avec la chambre de lyse, le réseau microfluidique linéaire, et le conduit s'il est présent, ou toute combinaison de ceux-ci, le module de préparation d'échantillon étant capable de contrôler la température de la chambre de lyse ; et
un système optique d'excitation et de détection qui est en communication optique avec le réseau microfluidique linéaire.

2. Système de préparation et d'analyse d'échantillons selon la revendication 1, dans lequel le réseau microfluidique linéaire est situé sur une cartouche susceptible d'être insérée par compression dans un orifice de sortie fluidique disposé sur le dispositif de type carte.

3. Système de préparation et d'analyse d'échantillons selon la revendication 1, dans lequel le réseau microfluidique linéaire comprend un canal d'écoulement linéaire plus étroit que 250 µm.

4. Système de préparation et d'analyse d'échantillons selon la revendication 1, dans lequel le conduit facultatif comprend un circuit en serpentin.

5. Système de préparation et d'analyse d'échantillons selon la revendication 1, dans lequel le réseau microfluidique linéaire comprend une pluralité de sondes tentaculaires spécifiques d'une pluralité d'organismes biologiques.

6. Système de préparation et d'analyse d'échantillons selon la revendication 1, dans lequel le système optique d'excitation et de détection comprend un dispositif de balayage capable de balayer ledit microréseau avec une source de photons d'excitation pour résoudre spatialement des sondes d'acide nucléique de détection individuelles sur ledit microréseau linéaire.

7. Système de préparation et d'analyse d'échantillons selon la revendication 6, dans lequel le dispositif de balayage est capable de résoudre de 0,05 molécule de colorant à 1 molécule de colorant par micromètre carré de surface de microréseau linéaire.

8. Système de préparation et d'analyse d'échantillons selon la revendication 7, dans lequel le dispositif de balayage détecte des complexes cible/sonde d'acide nucléique fixés.

9. Module de préparation d'échantillon selon la revendication 1, le module de préparation d'échantillon étant capable de contrôler la température de la chambre de lyse, du réseau microfluidique linéaire et du conduit.

10. Procédé d'identification d'un ou plusieurs organismes biologiques cibles, en l'absence d'amplification en chaîne par polymérase, le procédé comprenant :
la lyse d'une ou plusieurs cellules ou spores issues d'un ou plusieurs organismes biologiques dans une chambre de lyse thermique pour obtenir un lysat, ladite lyse donnant naissance à des acides nucléiques issus dudit ou desdits organismes biologiques ;
la filtration desdits acides nucléiques à partir dudit lysat ;
le transport desdits acides nucléiques jusqu'à un microréseau linéaire poreux, ledit microréseau linéaire poreux comprenant une pluralité de sondes positionnées spatialement susceptibles d'hybrider avec au moins une partie des acides nucléiques issus de chacun desdits organismes biologiques cibles, et le microréseau linéaire comprenant un monolithe polymère poreux qui diminue le temps de diffusion des acides nucléiques issus du ou des organismes biologiques cibles à hybrider avec les sondes, le monolithe polymère poreux comprenant des sondes d'acide nucléique qui comprennent une ou plusieurs sondes tentaculaires ;
l'hybridation d'au moins un acide nucléique issu de l'un au moins des organismes biologiques cibles avec l'une au moins des sondes ;
l'excitation par fluorescence des sondes hybridées avec au moins un acide nucléique issu de l'un au moins des organismes biologiques cibles ;
la détection de la position spatiale de l'une au moins des sondes excitées sur le microréseau linéaire ; et
la corrélation de la position spatiale de la sonde excitée sur le microréseau linéaire avec l'identité de l'une au moins des cellules ou spores.

11. Procédé selon la revendication 10, comprenant une pluralité de sondes de détection positionnées spatialement pour tester de multiples analytes dans un échantillon.
